# EUROPÄISCHE PATENTSCHRIFT

(11) **EP 4 087 816 B1**
(45) Veröffentlichungstag und Bekanntmachung des Hinweises auf die Patenterteilung: **06.12.2023**
(21) Anmeldenummer: 21700821.8
(22) Anmeldetag: 05.01.2021
(51) Int. Cl.: C04B 11/05, C01B 17/50, C01B 17/74, C01B 25/232, C01F 11/08, C01F 11/46, C04B 7/04, C04B 11/00

(54) **INTEGRIERTES VERFAHREN ZUR HERSTELLUNG EINES BAUSTOFFS AUS PHOSPHORGIPS**
INTEGRATED METHOD FOR PRODUCING A BUILDING MATERIAL FROM PHOSPHOGYPSUM
PROCÉDÉ INTÉGRÉ DE FABRICATION D'UN MATÉRIAU DE CONSTRUCTION EN PLÂTRE PHOSPHORÉ

(30) Priorität: 08.01.2020 DE 102020100254
(43) Veröffentlichungstag der Anmeldung: 16.11.2022
(73) Patentinhaber: thyssenkrupp Polysius GmbH, 59269 Beckum (DE); thyssenkrupp AG, 45143 Essen (DE)
(72) Erfinder: HOPPE, Andreas, 59555 Lippstadt (DE); FABIAN, Carsten, 59302 Oelde (DE); GRUND, Guido, 59457 Werl (DE); SCHEFER, Dirk, 59320 Ennigerloh (DE)
(74) Vertreter: thyssenkrupp Intellectual Property GmbH
(86) Internationale Anmeldenummer: PCT/EP2021/050032
(87) Internationale Veröffentlichungsnummer: WO 2021/140073

(56) Entgegenhaltungen:
- EP-A1- 0 041 761
- DE-B1- 1 667 635
- US-A- 4 312 842
- US-A- 4 415 543

## Beschreibung

Die Erfindung betrifft ein integriertes Verfahren zur Herstellung von Schwefelsäure und Zementklinker unter Verwendung von Kalziumsulfat, das bei der Phosphorsäureproduktion entsteht, und eine Anlage zur Durchführung des Verfahrens.

Kalziumsulfat ist ein Abfallprodukt der Phosphorsäure produzierenden Industrie und fällt als Dihydrat und/oder Hemihydrat bei dem Aufschluss von Phosphaterzen mit Schwefelsäure an. Das bei der Herstellung von Phosphorsäure gebildete Kalziumsulfat wird auch als Phosphorgips bezeichnet.

Drei Formen des Kalziumsulfats, Dihydrat (auch bekannt als Gips), Hemihydrat (auch Bassanit) und Anhydrit, können bei Phosphorsäureproduktionsverfahren anfallen und zeichnen sich mineralogisch durch unterschiedliche Mengen an Kristallwasser aus. Das Dihydrat besitzt zwei Wassermoleküle (Kristallwasser), das Hemihydrat ein halbes Wassermolekül (Kristallwasser) und das Anhydrit kristallisiert ohne jegliches Kristallwasser.

Die Reaktionskinetik und die thermodynamische Stabilität der unterschiedlichen Formen des Kalziumsulfats in wässrigen Medien sind intensiv untersucht wie bspw. im Übersichtsartikel von Freyer und Voigt, Monatshefte für Chemie, 134, 693-719, 2003 nachzulesen ist. Bekannt ist dabei, dass die Dihydrat-Form bis ca. 50 °C die stabile Form in wässriger Lösung ist. Darüber hinaus ist das Anhydrit die stabile Phase. Hemihydrat hingegen ist über den gesamten Temperaturbereich metastabil. Ausgehend vom Gips ist somit mit einer allmählichen Umwandlung zum Anhydrit in einem Temperaturbereich zwischen 42 - 60 °C (in der Literatur werden verschiedene Temperaturbereiche postuliert) für wässrige Lösungen zu rechnen. Dies beruht darauf, dass die Löslichkeit von Anhydrit bei steigenden Temperaturen kontinuierlich sinkt. Für Gips steigt die Löslichkeit hingegen zunächst bis zu einem Plateau bei ca. 50 °C an und sinkt dann leicht bei steigender Temperatur. Dies hat zur Folge, dass sich im obig genannten Temperaturbereich die molaren Löslichkeiten der beiden Formen kreuzen und oberhalb der Temperaturen Anhydrit und unterhalb Dihydrat als schwerlösliche Salze ausfallen. Das Hemihydrat ist über den gesamten Bereich besser löslich als die beiden anderen Formen.

Hardie, The American Mineralogist, Vol. 52, 1967 konnte zeigen, dass Schwefelsäure, aufgrund der dadurch veränderten Aktivität von Wasser, einen signifikanten Einfluss auf die Kinetik der Umkristallisation des Gipses zu Anhydrit hat. Eine verminderte Aktivität des Wassers setzt dabei die Gleichgewichtstemperatur zwischen Dihydrat und Anhydrit herab und begünstigt somit die Umkristallisation zu Anhydrit bei niedrigeren Temperaturen.

Bedingt durch Verunreinigungen wie Phosphor, Fluor, radioaktive Komponenten und andere unerwünschte Begleitelemente im Kalziumsulfat aus der Phosphorsäureproduktion sind die heutigen Möglichkeiten zur Verwendung des Kalziumsulfates, z.B. als Zementzusatzstoff, Düngemittel, Mörtel oder Straßenbaumaterial, eingeschränkt, so dass weltweit nur 15% der Jahresproduktion an Kalziumsulfat aus der Phosphorsäureproduktion entsprechend verwendet werden. Die restlichen 85% der Jahresproduktion an Kalziumsulfat werden entweder auf Halde gelagert oder im Meer verklappt.

Aufgrund der aktuellen Umweltsituation werden Lagerstätten zur Deponierung des Phosphorgipses oder die Verklappung von Phosphorgips im Meer entweder nur unter strengeren Auflagen oder gar nicht mehr genehmigt.

Die aus dem Phosphorsäureprozess erzielte Phosphorgipsqualität ist abhängig von Faktoren wie eingesetztes Rohphosphat und Prozessbedingungen bei dem Aufschluss des Rohphosphats mit Schwefelsäure.

Der aufbereitete Rohphosphat kann nach den folgenden Aufbereitungsverfahren über die möglichen Phosphorsäureverfahren zur Phosphorgipsherstellung eingesetzt werden: 1. Kalzinierung, 2. Flotation, 3. Umwandlung in Mono-Kalzium-Phosphat oder Di-Kalzium-Phosphat mit Hilfe anorganischer Säuren. Die genannten Verfahren sind dem Fachmann bekannt und sind z.B. beschrieben in Physical and thermal treatment of phosphate ores - An overview; Int. J. Miner. Process. 85 (2008) 59-84; Abdel-Zaher M. Abouzeid; The Fertilizer Manual 3rd Edition; herausgegeben von UNIDO & IFDC, Ausgabe 1998; ISBN: 0792350324 9780792350323; sowie Pyroprocessing for the minerals industry Thyssenkrupp Polysius; Kennung: 1625/D (1.0 12.11 Stu).

Pro Tonne produzierter Phosphorsäure werden je nach Art des Rohphosphat und Produktionsverfahren 4 bis 5 Tonnen Kalziumsulfat produziert. Auf Grund der naturgemäß unterschiedlichen Qualitäten/Zusammensetzungen der Phosphaterze und der unterschiedlichen Verfahrensparameter zur Herstellung von Phosphorsäure werden auch entsprechend unterschiedliche Qualitäten an Kalziumsulfaten produziert.

Die erhöhten Anforderungen zur Handhabung des produzierten Kalziumsulfates bzw. Phosphorgips stellen die Phosphorsäure produzierende Industrie vor komplexe Herausforderungen. Schätzungen zu den Kosten, incl. der dauerhaften Folgekosten für die Lagerung von Phosphorgips gehen von bis zu 25 Dollar/t Gips für die produzierenden Unternehmen aus.

Als Beispiel zur möglichen kommerziellen und großtechnischen Verwendung von Kalziumsulfat/Phosphorgips wird in der Literatur vielfach die Umsetzung von Phosphorgips in Zementklinker bzw. Zement und SOz bzw. Schwefelsäure genannt. Die Umsetzung von natürlichem Gips, verschiedenen Gips-Zwischenprodukten und Phosphorgips in Zement und Schwefelsäure nach dem Müller-Kühne-Prozess oder nach dem OSW-Krupp-Prozess sind seit langem bekannt, siehe z.B. Patentschrift AT 292539 B; zumindest für die Verarbeitung von Phosphorgips wird dieses Verfahren aber in der Praxis kaum noch verwendet.

DE 3222721 C2 beschreibt auf Grundlage des Müller-Kühne-Prozesses ein verbessertes Verfahren durch eine vorgeschaltete Teilentwässerung des Gipses durch Zentrifugieren mit nachgeschalteter zweistufiger Trocknung, wobei das aus der ersten Trocknungsstufe austretende SOz-haltige Abgas direkt in den Gaswäscher der Schwefelsäureanlage eingeleitet wird. Das beschriebene Verfahren nimmt keinen Bezug auf Qualität des Phosphorgips hinsichtlich bestimmter Komponenten und auch keinen Bezug auf die Qualität des SOz-Abgases für die angedeutete, nachgeschaltete Schwefelsäureanlage.

Kandil et al., Journal of Radiation Research and Applied Sciences; 10; 2017, beschreiben ein Verfahren zur Herstellung von Ammoniumsulfat aus Phosphorgips, in dem in einem ersten Schritt Schwefelsäure zur Auslaugung von P₂O₅, F, Lanthaniden und weiteren Bestandteilen eingesetzt wird. Das beschriebene Verfahren steht in keinem Zusammenhang mit der Umwandlung von Phosphorgips in Zementklinker und Schwefelsäure.

EP 0041761 A1 betrifft im Zusammenhang mit der Umwandlung von Phosphorgips in Zementklinker und SO₂-Gas ausschließlich die Umkristallisation von Kalziumsulfat-dihydrat nach Kalziumsulfat-anhydrit. Es können P₂O₅-Gehalte von unter 0,01Gewichts-% und Fluor-Gehalte von unter 0,05 Gewichts-% im Kalziumsulfat-anhydrit erzielt werden. Aus dem so gewonnenen Anhydrit können bei hohen Temperaturen Kalziumkomponenten und Schwefeldioxid gewonnen werden. Die Möglichkeit zur Rückführung von verbrauchter Schwefelsäure in den Phosphorsäureprozess wird erwähnt, jedoch werden Einflussfaktoren wie Korngröße des Gipses sowie Feststoff zu Flüssigkeit-Verhältnis (S/L), die direkten Einfluss auf die Wasserbilanz im Phosphorsäurekomplex haben, nicht berücksichtigt.

CN 103466982 A beschreibt ein Verfahren zur Behandlung von Phosphorgips mit einer Wasserwäsche und Mischen des erhaltenen Phosphorgipses mit Kalk und Flugasche, um einen modifizierten Phosphorgips mit einem Wassergehalt von weniger als 10%, einem CaO-Anteil von mehr als 35%, einem Phosphoroxidgehalt von weniger als 0,01% und einem Fluoridgehalt von weniger als 0,01% zu erhalten

CN 1948131 A betrifft ein Verfahren zur Herstellung von Schwefelsäure und Zement unter Verwendung von Phosphorgips und Schwefel, in dem der Phosphorgips gewaschen wird, um einen P₂O₅-Gehalt von weniger als 1% und einen Fluorgehalt von weniger als 0,35% zu erhalten, und anschließend für die Klinkerherstellung verwendet wird.

IN 215676 B betrifft ein Verfahren zur Reinigung von Phosphorgips durch Extrahieren von P₂O₅, F, organisches Material und Alkalien mit wässriger Citronensäure. Der PzOs-Gehalt kann im Bereich von 0,42-0,92 Gew.-% und der Fluorgehalt im Bereich von 0,44-0,86 Gew.-% liegen. Die Verwendung des gereinigten Phosphorgipses als Baumaterial wird beschrieben.

US 3717489 A beschreibt ein Verfahren zur Herstellung von Zementklinker auf Basis von Kalziumsulfat mit Reduktion mit Koks, wobei als Kalziumsulfat eine Mischung von Anhydrit oder natürlichem Gips mit einem Phosphorgips mit einem PzOs-Gehalt von 0,5-2,5 Gew.-% und einem Fluorgehalt von 0,5-1 Gew.-% eingesetzt wird.

US 4388292 A beschreibt ein Verfahren zur Verringerung der radioaktiven Elemente in Phosphorgips, welches zwei Kristallisationsstufen beinhaltet.

Aus der US 4 415 543 A ist ein Verfahren zur Behandlung von Phosphorgips aus der Phosphorsäureherstellung bekannt.

Aus der EP 0 041 761 A1 ist die Rückgewinnung von Calciumverbindungen und Schwefeldioxid aus Gips bekannt.

Aus der US 4 312 842 A ist die Rückgewinnung der Nebenprodukte bei der Phosphorsäureherstellung bekannt.

Aus der DE 16 67 635 B1 ist ein Verfahren zur Herstellung von Phosphorsäure bekannt.

Generell werden in der Literatur lediglich die jeweiligen Einzelprozesse wie Aufbereitung des Phosphorgipses, thermische Zersetzung des Phosphorgipses in Zementklinker und Schwefeldioxid beschrieben. Nur vereinzelt werden mögliche Zusammenhänge mit den erforderlichen vor- und/oder nachgeschalteten Prozessen erwähnt.

Die Aufgabe der vorliegenden Erfindung besteht darin, ein Verfahren zur Verwendung von bei der Phosphorsäureproduktion entstehendem Kalziumsulfat (Phosphorgips) zur Herstellung von Wertprodukten bereitzustellen, das gezielt auf die Nutzung von Phosphorgips ausgerichtet ist und im industriellen Maßstab verwendet werden kann, um die umweltbedingten und wirtschaftlichen Anforderungen zu erfüllen, um so die großen Mengen an entstehendem Phosphorgips verarbeiten zu können. Eine weitere Aufgabe bestand in der Anpassung, Optimierung und Kontrolle des Reinigungsprozesses des Kalziumsulfats/Phosphorgipses hinsichtlich zu erzielender Zementklinkerqualität.

Diese Aufgabe wird erfindungsgemäß durch ein Verfahren gemäß Patentanspruch 1 gelöst. Insbesondere wird die Aufgabe gelöst durch ein Verfahren zur Herstellung von Schwefelsäure und Zementklinker unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und abgetrennt wird, wobei das Verfahren folgende Schritte umfasst:
a) das von der Phosphorsäure abgetrennte Kalziumsulfat wird mit einer Säure behandelt, um eine Suspension mit gereinigtem Kalziumsulfat zu erhalten,
b) das gereinigte Kalziumsulfat wird als Feststoff von der flüssigen Phase der erhaltenen Suspension abgetrennt,
c) das abgetrennte gereinigte Kalziumsulfat wird mit Zusatzstoffen und Reduktionsmittel vermischt, um eine Rohmehlmischung für die Zementklinkerproduktion zu erhalten, wobei in der Rohmehlmischung die Kalziumkomponente für den Zementklinker vorzugsweise vollständig von dem abgetrennten gereinigten Kalziumsulfat gebildet wird,
d) die Rohmehlmischung wird gebrannt, um den Zementklinker zu erhalten, wobei Schwefeldioxid als Abgas gebildet wird, und
e) das gebildete Schwefeldioxid wird als Rohstoff einer Schwefelsäureproduktion zugeführt, um die Schwefelsäure herzustellen, wobei die hergestellte Schwefelsäure als Einsatzmaterial in der Phosphorsäureproduktion verwendet und/oder einer anderen Nutzung zugeführt werden kann.

Das erfindungsgemäße Verfahren ist insbesondere ein integriertes Verfahren. Der integrative Ansatz als Gesamtkonzept vom Phosphorgips zum Zementklinker und Schwefeldioxid bei dem integrierten Verfahren ermöglicht die Abstimmung der Abhängigkeiten/Einflussfaktoren zur optimierten Verfahrenswahl und damit verbunden die einhergehende Flexibilität der Prozessführung mit der Möglichkeit, in bestehende Phosphorsäure- und Schwefelsäureanlagenkomplexe eingebunden zu werden. So können alle Prozessparameter und Verfahrensstufen des Gesamtkomplexes zur Erzielung spezifischer Produktqualitäten ausgehend von einer variablen Eduktbeschaffenheit, wie z.B. der Eduktbeschaffenheit von dem in der Phosphorsäureproduktion eingesetzten Apatit oder dem Phosphorgips der aktuellen Produktion bzw. der Halde aufeinander abgestimmt werden. Dies wurde bis heute nicht betrachtet. Die Merkmalskombinationen des erfindungsgemäßen integrativen Verfahrens lassen sich aus dem Stand der Technik nicht herleiten.

Im Folgenden werden in diesem Zusammenhang die Ausdrücke Komplex und Anlage austauschbar verwendet. Die in Schritt b) erhaltene abgetrennte flüssige Phase kann in die Reaktionseinheit der Phosphorsäureproduktion als Einsatzstoff eingebracht werden.

Als Vorteile des erfindungsgemäßen Verfahrens, insbesondere des integrierten Verfahrens können insbesondere folgende Punkte genannt werden:
1. Einsatz des produzierten Kalziumsulfates/Phosphorgips als Rohstoff zur Herstellung von Wertprodukten unabhängig von der Art des Phosphorgipses.
2. Nutzung des Kalziumsulfates/Phosphorgips als einzigem Kalziumträger zur Herstellung von Zementklinker für die Zementproduktion und Schwefeldioxid als Rohmaterial für die Schwefelsäureproduktion
3. Vermeidung umweltbelastender Langzeitfolgen aus Deponierung / Verklappung von Kalziumsulfat / Phosphorgips
4. Rückgewinnung und Zirkulation des eingesetzten Schwefels im Phosphorsäureprozess und/oder einer weiteren Nutzung, wodurch lediglich ein Bedarf an zusätzlichem Schwefel zum Ausgleich von Verlusten im Gesamtprozess entsteht. Allgemeine Ausführungsbeispiele sind eine Kreislaufführung der Schwefelsäure oder die Nutzung von Phosphorgips aus Halden. In letzteren Fall muss Schwefelsäure exportiert werden, da durch die Zufuhr von Phosphorgips aus externen Quellen, insbesondere Halden, ein Schwefelüberschuss im Gesamtprozess resultiert. Ein Ausgleich des Schwefelhaushaltes ist daher insbesondere im Rahmen der Kreislaufführung von Schwefelsäure nötig
5. Erhöhung der Ausbeute an Phosphor aus dem Rohphosphat, damit bessere Verwertung des eingesetzten Rohphosphats zum Zweck der Phosphorsäureproduktion
6. Anpassung, Optimierung und Kontrolle des Reinigungsprozesses des Kalziumsulfats/Phosphorgipses hinsichtlich zu erzielender Zementklinkerqualität durch einfaches auf Ermittlung der Säurekonzentration basierendes Analysenverfahren
7. Reduzierung des CO2-Footprints durch den Einsatz von Kalziumsulfat/Phosphorgips als Rohmaterial für die Zementklinkerherstellung
8. Integrativer Einsatz bestehender Anlagenkomponenten des Phosphor- und Schwefelsäurekomplexes, damit reduzierter zusätzlicher Investitionsaufwand

Der hier beschriebene Ansatz des integrierten Verfahrens kann in 5 Kategorien von Herstellprozessen zusammengefasst werden:
- Herstellung von Kalziumsulfat/Phosphorgips mit geeigneter Qualität für den Zementklinkerprozess gemäß den Schritten a) und b) des erfindungsgemäßen Verfahrens,
- Herstellung der Rohmehlmischung, die für den Zementklinkerprozess spezifisch ist, gemäß Schritt c) des erfindungsgemäßen Verfahrens,
- Herstellung des Zementklinkers gemäß Schritt d) des erfindungsgemäßen Verfahrens und gegebenenfalls Weiterverarbeitung des Zementklinkers zu Zement,
- Herstellung von Schwefeldioxidgas mit einer Qualität, die für den Schwefelsäureprozess geeignet ist, gemäß Schritt d) des erfindungsgemäßen Verfahrens, wobei das Schwefeldioxidgas gegebenenfalls noch einer Abgasreinigung zu unterwerfen ist, bevor es Schritt e) zugeführt wird,
- Herstellung der Schwefelsäure gemäß Schritt e) des erfindungsgemäßen Verfahrens.

Das erfindungsgemäße Verfahren zur Herstellung von Schwefelsäure und Zementklinker unter Verwendung von Kalziumsulfat ist bevorzugt in eine Phosphorsäureproduktion integriert. Bei der Phosphorsäureproduktion handelt es sich um ein übliches Nassverfahren, bei der Rohphosphat mit Schwefelsäure umgesetzt bzw. aufgeschlossen wird, um Phosphorsäure (Aufschlussphosphorsäure) zu bilden.

Als Rohphosphat werden sedimentäre und magmatische Phosphatgesteine verwendet, die in der Regel vor dem Einsatz aufbereitet werden. Die Aufbereitung schließt üblicherweise ein Zerkleinern und Aufkonzentrieren hinsichtlich des Phosphorgehalts ein. Zur Aufbereitung kann Phosphaterz oder Phosphatgestein, insbesondere Apatit-haltiges Erz, z.B. einer Kalzinierung, Flotation und/oder Umwandlung in Mono-Kalzium-Phosphat oder Di-Kalzium-Phosphat mit Hilfe anorganischer Säuren, unterworfen werden.

Die Herstellung von Phosphorsäure nach dem Nassverfahren ist dem Fachmann allgemein bekannt. Allgemeine Beschreibungen des Verfahrens finden sich z.B. in Ullmann's Encyclopedia of industrial chemistry, 5. Auflage, 1991, Bd. A19, "Phosphoric Acid and Phosphate", S. 465-505.

Die Phosphorsäureproduktionsanlage umfasst bevorzugt eine Aufbereitungseinheit für Phosphatgestein, eine Reaktionseinheit für die Umsetzung von Rohphosphat mit Schwefelsäure sowie eine Filtrationseinheit zur Abtrennung von Kalziumsulfat. In der Regel umfasst die Phosphorsäureproduktionsanlage zusätzlich eine Schwefelsäureproduktionsanlage, so dass sich ein Phosphorsäure-Schwefelsäure-Komplex ergibt.

Für die Herstellung von Zementklinker und Schwefelsäure nach dem erfindungsgemäßen Verfahren kann z.B. Kalziumsulfat bzw. Phosphorgips aus den folgenden, existierenden und dem Fachmann bekannten Prozessen zur Herstellung von Phosphorsäure verwendet werden: 1. Dihydrat (DH)-Prozess, 2. Hemihydrat (HH)-Prozess, 3. Dihydrat-Hemihydrat (DHH)-Prozess, 4. Hemihydrat-Dihydrat (HDH)-Prozess und 5. Dihydrat-Attack-Hemihydrat-Filtration (DA-HF)-Prozess.

Für die vorliegende Erfindung ist im Allgemeinen einer der obigen fünf Prozesse einzusetzen, wobei bei den Prozessen 3. bis 5. (DHH/HDH/DA-HF) eine Rekristallisation des Kalziumsulfats erfolgt, was für das erfindungsgemäße Verfahren nicht erforderlich ist.

Nach dem erfindungsgemäßen Verfahren wird in Schritt a) das Kalziumsulfat, welches beispielsweise nach einem der obig genannten fünf Verfahren erhalten wurde, nach Abtrennung aus der Phosphorsäureproduktion mit einer Säure behandelt, wodurch die PzOs-Ausbeute erhöht wird.

Das aus der Phosphorsäureproduktion abgetrennte Kalziumsulfat wird somit vor Zuführung zu Schritt a) bevorzugt keiner Rekristallisation unterworfen.

Bei dem Verfahren der Phosphorsäureproduktion wird bei der Umsetzung von Rohphosphat mit Schwefelsäure zur Bildung von Phosphorsäure Kalziumsulfat als festes Nebenprodukt gebildet, das von der Phosphorsäure abgetrennt wird. Die Abtrennung kann z.B. durch Zentrifugieren, Filtrieren, Absetzen oder Eindampfen erfolgen, wobei eine mechanische Abtrennung bevorzugt ist. Das feste Kalziumsulfat wird bevorzugt durch Filtration von Phosphorsäure abgetrennt. Die Abtrennung umfasst oder besteht aus der Abtrennung von dem gebildeten Kalziumsulfat von der Phosphorsäure (Produktsäure) (erste Trennung), bevorzugt durch Filtration. Je nach Prozess kann der durch die erste Trennung abgetrennte Kalziumsulfat-Feststoff (bevorzugt Filterkuchen) gegebenenfalls noch einer oder mehreren Waschungen mit Flüssigkeit, insbesondere Wasser, mit anschließender Abtrennung, bevorzugt Filtration, der Flüssigkeit unterworfen werden.

Für das von der Phosphorsäure abgetrennte Kalziumsulfat, das in Schritt a) eingesetzt wird, kann das direkt nach der ersten Trennung von der Phosphorsäure erhaltene Kalziumsulfat verwendet werden, da eine weitere Waschung nicht zwingend erforderlich ist. Dadurch wird eine Reduktion der Filterfläche im Phosphorsäure-Prozess ermöglicht. Es ist aber auch möglich, für das von der Phosphorsäure abgetrennte Kalziumsulfat, das in Schritt a) eingesetzt wird, Kalziumsulfat zu verwenden, das nach der ersten Trennung von der Phosphorsäure einer oder mehreren Wäschen mit einer Flüssigkeit, vorzugsweise Wasser, unterworfen wurde, bevor es Schritt a) zugeführt wird.

Alternativ kann auf Halden gelagertes Kalziumsulfat aus der Phosphorsäureproduktion als das Kalziumsulfat verwendet werden, das in Schritt a) eingesetzt wird. Gegebenenfalls muss das Kalziumsulfat der Halden vor der Verwendung in Schritt a) durch eine oder mehrere Wäschen mit einer Flüssigkeit, vorzugsweise Wasser, gewaschen werden.

Die Umsetzung von Rohphosphat mit Schwefelsäure findet in dem Phosphorsäureproduktionskomplex in der Reaktionseinheit der Phosphorsäureanlage statt. Das erhaltene Reaktionsgemisch wird dann zur Trenneinheit, bevorzugt Filtrationseinheit, der Phosphorsäureanlage gefördert, wo die Phosphorsäure von dem gebildeten Kalziumsulfat in einer oder mehreren Trennstufen abgetrennt bzw. abfiltriert wird. Das Kalziumsulfat für den Einsatz in der Stufe a) wird der Trenneinheit bzw. Filtrationseinheit entnommen, bevorzugt aus der ersten Trennstufe, und/oder als Kalziumsulfat für den Einsatz in der Stufe a) wird auf Halden gelagertes Kalziumsulfat aus der Phosphorsäureproduktion verwendet.

Das abgetrennte Kalziumsulfat, das in Schritt a) eingesetzt wird, ist bevorzugt Kalziumsulfat in Form von Dihydrat, Hemihydrat oder einer Kombination davon.

In Schritt a) des erfindungsgemäßen Verfahrens wird das abgetrennte Kalziumsulfat aus der Phosphorsäureproduktion mit einer Säure behandelt. Die Säure wird dem Kalziumsulfat zugegeben, um die Behandlung durchzuführen. Auf diese Weise wird nach der Behandlung eine Suspension mit gereinigtem Kalziumsulfat erhalten. Bei der erhaltenen Suspension kann es sich z.B. um einen Schlamm bzw. eine Aufschlämmung handeln. Durch die Behandlung können die Verunreinigungen im Kalziumsulfat, die den nachgeschalteten Zementklinkerprozess und die Zementqualität negativ beeinflussen, auf den vom nachgelagerten Zementklinkerprozess geforderten Gehalt reduziert werden. Die Konzentration der Verunreinigungen kann durch ein Analysenverfahren überwacht und kontrolliert werden. Das Analyseverfahren kann ein direktes oder indirektes Analyseverfahren sein.

Zur Behandlung des Kalziumsulfats in Schritt a) wird eine Säure zugegeben. Die Säure ist bevorzugt eine verdünnte Säure. Verdünnte Säuren sind Säuren, die mit Wasser verdünnt sind (wässrige Säuren). Die Säure, bevorzugt die verdünnte Säure, ist vorzugsweise eine anorganische Säure, z.B. Salzsäure, Salpetersäure, schweflige Säure und/oder Schwefelsäure, wobei schweflige Säure und/oder Schwefelsäure besonders bevorzugt sind.

In Schritt a) wird die Säure bevorzugt in einer solchen Menge zugegeben, dass das Verhältnis von Feststoff zu Flüssigkeit (S/L-Verhältnis) in der Suspension im Bereich von 1/10 bis 1/1, bevorzugt 1/5 bis 1/1, bevorzugter 1/5 bis 1/1,3 und insbesondere 1/4 bis 1/2 liegt. Das Verhältnis von Feststoff zu Flüssigkeit (S/L-Verhältnis) bezieht sich auf die Masse des Feststoffs in Kilogramm und das Volumen der Flüssigkeit in Liter bei einer Bezugstemperatur von 20°C.

Die Konzentration der eingesetzten Säure wird dabei so gewählt, dass die aus der Behandlung nach Schritt a) resultierende Säure z.B. im Bereich von 1 bis 12 molar, vorzugsweise im Bereich von 3 bis 10 molar, bevorzugter im Bereich von 5 bis 8 molar, liegt, wobei es sich um eine wässrige Säure handelt. Unter 1 molar wird dabei 1 mol Säure pro 1 Liter Lösung bei 20 °C verstanden.

Da das zu behandelnde Kalziumsulfat Wasser enthalten und während des Reaktionsverlaufs Kristallwasser frei werden kann, kann die Konzentration der zugesetzten Säure höher sein als die Konzentration der nach der Zugabe resultierenden Säure. Bei hohen Restsäure-Gehalten im eingesetzten Phosphorgips, wie bspw. freie Phosphorsäure, kann die Konzentration der zugesetzten Säure aber auch niedriger sein als die Konzentration der nach der Zugabe resultierenden Säure. Die Konzentration der resultierenden Säure kann über den gesamten Reaktionsverlauf schwanken.

Wird während des Reaktionsverlaufs die Säurekonzentration geringer, so ist dies ein direkter Hinweis auf eine Umkristallisation des Dihydrats und/oder Hemihydrats zu Anhydrit. Steigt die Säurekonzentration bspw. am Anfang des Reaktionsverlaufs hingegen zunächst an, so kann dies ein direkter Hinweis auf das Vorliegen von freier Phosphorsäure und/oder Lewis-Säuren wie z.B. dreiwertiges Eisen sein.

Es hat sich nun gezeigt, dass die Säurekonzentration während des Reaktionsverlaufs - gegebenenfalls nach anfänglich kurzer Erhöhung wegen besagter freier Säuren bzw. Lewis-Säuren - durch ein Minimum geht und dann erneut wieder leicht ansteigt. Das Minimum der Säurekonzentration steht im direkten Zusammenhang mit einer maximalen Umwandlung zum Anhydrit und einer (nahezu) maximalen Reinigungseffizienz hinsichtlich P₂O₅ und Fluorid, wobei die Reinigungseffizienz hinsichtlich Fluorid-Gehalt zumeist schon nach kürzeren Reaktionszeiten erreicht ist. Die Säurekonzentration kann nun somit als Indikation für den Reaktionsfortschritt herangezogen werden.

Als weiteres wurde festgestellt, dass unter nicht-Anhydrit-bildenden Reaktionsbedingungen, welche hier definiert werden als beliebige Kombination an Reaktionsparametern aus Temperatur, S/L-Verhältnis und Säurekonzentration von mindestens 4 mol/l, bei denen direkt nach Zugabe der Säure zum Phosphorgips (bzw. maximal nach einer Minute Verweilzeit nach Säurezugabe) die Reaktion beendet und der Feststoff von der Flüssigkeit getrennt wird, der Rest-Gehalt an P₂O₅ im Phosphorgips quasi einem weitestgehend identischem Grenzwert signifikant größer 0 Gew.-% entgegen strebt. Dieser Grenzwert kann als eine Art "Gipskonstante" für den jeweiligen Phosphorgips angesehen werden. Ist darüber hinaus eine effizientere Reinigung notwendig, so muss die Auslaugung unter Anhydrit-bildenden Reaktionsbedingungen, welche hier definiert werden als beliebige Kombination an Reaktionsparametern aus Temperatur, S/L-Verhältnis, Säurekonzentration und Verweilzeit, bei denen nach Reaktionsende mehr als 50 Gew.-% Anhydrit vorliegen (z.B. ermittelt mittels Röntgendiffraktometrie), stattfinden.

Nach den vorherigen Ausführungen liegt somit folgender Zusammenhang zwischen Säurekonzentration der Auslaugungslösung, Anhydrit-Gehalt des gereinigten Phosphorgipses und P₂O₅-Gehalt des gereinigten Gipses vor:
1) Am Minimum der Säurekonzentration liegt eine (quasi) maximale Umwandlung zum Anhydrit vor.
2) Bei maximaler Umwandlung zum Anhydrit liegt ebenfalls eine nahezu maximale Reinigungseffizienz hinsichtlich P₂O₅ vor
3) Der P₂O₅-Gehalt unter nicht-Anhydrit-bildenden Bedingungen nimmt für den jeweiligen Gips einen konstanten Wert an, welcher unter nicht-Anhydrit-bildenden Bedingungen nicht weiter unterschritten werden kann und stellt damit quasi eine "Gipskonstante" für den jeweiligen Phosphorgips dar.
4) P₂O₅-Gehalte unterhalb der "Gipskonstante" nehmen linear mit der Zunahme an Anhydrit-Gehalt im gereinigten Gips ab und gehen quasi gegen 0 Gew.-% bei gleichzeitig vorliegender maximaler Umwandlung zum Anhydrit.

Unter wirtschaftlichen Gesichtspunkten kann es nun vorteilhaft sein entweder eine maximale Auslaugungseffizienz hinsichtlich P₂O₅-Gehalt zu erzielen, z.B. zur Effizienzsteigerung einer integrierten Phosphorsäureanlage, oder die Reinigungseffizienz lediglich auf die erforderliche Zementklinkerqualität bei Maximierung der Umsatzrate bzw. Minimierung des Investitionsaufwands z.B. durch kleinere Reaktionsbehälter, Rohrleitungen, etc., abzustimmen.

Für eine maximale Auslaugungseffizienz ist vorteilhaft den Zeitpunkt des Reaktionsabbruchs (im Allgemeinen definiert als t₍ᵢ₎) in Schritt a) und damit die Einleitung des Trennprozesses des Feststoffs von der flüssigen Phase der Suspension in Schritt b) zu wählen, an dem die Säurekonzentration Cₜ₍ᵢ₎ mindestens das Konzentrationsminimum C_{t(MIN)} erreicht bzw. durchschritten hat. Die Differenz aus Säurekonzentration der Reaktionsmischung zu Beginn der Reaktion (Säurekonzentration Cₜ₍₀₎ zum Zeitpunkt t₍₀₎, Verweilzeit t₍₀₎ = 0 min.) und zum Zeitpunkt des Reaktionsabbruchs bei minimaler Säurekonzentration C_{t(MIN)} (Verweilzeit am Minimum der Säurekonzentration definiert als t_{(MIN)}) stellt somit eine maximale Differenz hinsichtlich der Säurekonzentration dar. Zu dieser kann zum Zwecke der Normierung des Wertebereiches ein Parameter der relativen Säuredifferenz definiert werden. Dieser wird ausgedrückt als ΔCₜ₍ᵢ₎ = 1-((Cₜ₍ᵢ₎-C_{t(MIN)})/(Cₜ₍₀₎-C_{t(MIN)})) = 100 %; mit t₍ᵢ₎ = t_{(MIN)}.

Der Zeitpunkt zu Beginn der Reaktion t₍ₒ₎ liegt theoretisch betrachtet direkt bei Zugabe der Säure zum Phosphorgips, d.h. zum Zeitpunkt t₍₀₎ = 0 Minuten, vor. Aus praktischen Gründen der Probenahme bzw. Messung der Säurekonzentration ist es angebracht den Zeitpunkt t₍₀₎ in einem Bereich von 0 bis einer Minute zu wählen. Im vorhergehenden und nachfolgenden Text ist daher als Zeitpunkt t₍₀₎ ein Zeitpunkt im Bereich von 0 bis einer Minute definiert.

Ist lediglich eine Minimalanforderung an eine resultierende Zementklinkerqualität gewünscht, so kann es vorteilhaft sein, aufgrund des bekannten linearen Zusammenhangs zwischen P₂O₅-Gehalt (unterhalb der "Gipskonstante") und Anhydrit-Gehalt bzw. der Änderung der Säurekonzentration, als Zeitpunkt des Reaktionsabbruchs (t₍ᵢ₎) in Schritt a) und damit die Einleitung des Trennprozesses des Feststoffs von der flüssigen Phase der Suspension in Schritt b) einen Zeitpunkt (t₍ᵢ₎) zu wählen, der vor Erreichen einer minimalen Säurekonzentration (t_{MIN)}) liegt (somit also t₍ᵢ₎ < t_{(MIN)}). Hieraus folgt für ΔCₜ₍ᵢ₎ < 100 % für einen beliebigen Zeitpunkt t₍ᵢ₎.

In bevorzugten Ausführungsformen ist es daher vorteilhaft den Trennprozess b) des erfindungsgemäßen Verfahrens zur Trennung des Feststoffes von der flüssigen Phase der Suspension aus Schritt a) zu einem Zeitpunkt t₍ᵢ₎ (wobei t₍ᵢ₎ < t_{(MIN)}) einzuleiten, an dem die Differenz der Säurekonzentration zwischen resultierender Säurekonzentration nach direkter Zugabe der Säure zum zu reinigenden Phosphorgips (ct(i) zum Zeitpunkt t₍₀₎) und Säurekonzentration ct(i) an besagten Reaktionsende (t₍ᵢ₎) mindestens 25 % (ΔCₜ₍ᵢ₎ = 1-((Cₜ₍ᵢ₎-C_{t(MIN)})/(Cₜ₍₀₎-C_{t(MIN)})) ≥ 25 %), bevorzugter mindestens 40 % (ΔCₜ₍ᵢ₎ = 1-((Cₜ₍ᵢ₎-C_{t(MIN)})/(Cₜ₍₀₎-C_{t(MIN)})) ≥ 40 %), noch bevorzugter mindestens 75 % (ΔCₜ₍ᵢ₎ = 1-((Cₜ₍ᵢ₎-C_{t(MIN)})/(Cₜ₍₀₎-C_{t(MIN)})) ≥ 75 %) der Differenz zwischen resultierender Säurekonzentration Cₜ₍₀₎ nach direkter Zugabe der Säure zum zu reinigenden Phosphorgips (Cₜ₍ᵢ₎ zum Zeitpunkt t₀) und erzielbares Minimum der Säurekonzentration (C_{t(MIN)}) bei gegebenen Reaktionsbedingungen beträgt.

Die Bestimmung der Säurekonzentration Cₜ₍ᵢ₎ kann sowohl kontinuierlich als auch diskontinuierlich erfolgen. Die Messung und/oder Bestimmung der Säurekonzentration kann direkt oder indirekt erfolgen. Für die Messung kann eine on-line und/oder off-line Analytik genutzt werden. Zur Bestimmung der Säurekonzentration können bspw. Verfahren wie Säure-Base-Titration (z.B. potentiometrisch, thermometrisch oder mittels Säure-Base Indikator, etc.), Bestimmung des pH-Werts der Säure oder einer definierten Verdünnung der Säure, Dichte-Bestimmung der Säure und/oder kombinierte Verfahren aus Dichte und/oder Schallgeschwindigkeit und/oder Brechungsindex eingesetzt werden. Die gewählten Beispiele zur Säurebestimmung sollen den Umfang der beanspruchten Erfindung in keiner Weise einschränken.

Die Bestimmung der minimalen Säurekonzentration C_{t(MIN)} zum Zeitpunkt t_{(MIN)} kann im Vorfeld im Labor und/oder kontinuierlich im Prozess für den jeweiligen Gips erfolgen.

Die Säurekonzentration Cₜ₍₀₎ zum Zeitpunkt t₍₀₎ kann im Vorfeld im Labor und/oder kontinuierlich im Prozess für den jeweiligen Gips erfolgen. Wobei sich im Labor als praktikabel erwiesen hat als Zeitpunkt der Bestimmung der Säurekonzentration maximal eine Minute nach Reaktionsstart zu wählen. Vorteilhaft bei diesem Vorgehen ist zum einen, dass Restfeuchtegehalte im Phosphorgips mitberücksichtigt werden und zum anderen kann dieser Reaktionszeitpunkt genutzt werden, um die zuvor definierte "Gipskonstante" zu bestimmen. Die resultierende Säurekonzentration nach Zugabe der Säure zum zu reinigenden Phosphorgips (Verweilzeit t₀ = 0 min.) wird daher insbesondere 1 Minute nach Zugabe der Säure bestimmt.

Im Allgemeinen liegt die Molarität der zugesetzten Säure bevorzugt in den Bereichen, die vorstehend und nachstehend für die resultierende Säure genannt wird.

Die aus der Behandlung nach Schritt a) resultierende Säure ist bevorzugt eine 1 bis 12 molar, bevorzugt 5 bis 8 molare schweflige Säure oder eine 1 bis 12 molar, bevorzugt 5 bis 8 molare Schwefelsäure ist. Die zugegebene Säure ist daher bevorzugt eine schweflige Säure oder eine Schwefelsäure.

Die Behandlung in Schritt a) wird z.B. bei Reaktionstemperatur im Bereich zwischen Umgebungstemperatur und Siedepunkt des Reaktionsgemisches durchgeführt, z.B. bei einer Temperatur im Bereich von 15°C bis 100°C, vorzugsweise 30°C bis 80°C, bevorzugter 45 bis 75°C.

Die Dauer der Behandlung in Schritt a) bzw. die Reaktions-Verweilzeit für die Einstellung der Gehalte an Verunreinigungen in der Säure liegt z.B. im Bereich von 5 Minuten bis 120 Minuten, bevorzugt von 15 bis 100 Minuten, insbesondere 15 bis 90 Minuten, besonders bevorzugt 20 bis 60 Minuten.

Die Reaktionsparameter zur Behandlung des Gipses werden dabei bevorzugt mittels einer on-line und/oder off-line Analytik, welche auf der Verdünnung der eingesetzten Säure durch frei werdendes Kristallwasser aufgrund der Umkristallisierung des Phosphorgipses zu zumindest teilweise Anhydrit beruht, eingestellt und optimiert.

In einer besonders bevorzugten Ausführungsform wird die optimale Reaktions-Verweilzeit in Schritt a) derart gewählt, dass die Abnahme der Säurekonzentration mindestens 1 % (relativ), besonders bevorzugt mindestens 2 % (relativ) und insbesondere bevorzugt mindestens 3 % (relativ) bezogen auf die Anfangskonzentration beträgt.

Die Bestimmung der Säurekonzentration über den zeitlichen Verlauf der Reaktion bei gewählter Reaktionsbedingung wie Anfangskonzentration der Säure, Reaktionstemperatur und S/L-Verhältnis kann im Vorfeld zum Beispiel in einem Labor (off-line) durchgeführt werden, um ideale Reaktionsparameter für den Prozess zu ermitteln.

In einer bevorzugten Ausführungsform wird die Bestimmung der Säurekonzentration über den zeitlichen Verlauf der Reaktion während der Produktion durchgeführt. Dabei kann die Säurekonzentration off-line (z.B. im Labor) und/oder on-line (z.B. durch einen On-line Analysator) ermittelt werden. Der Vorteil dieser Ausführungsform ist, dass der Prozess direkt überwacht werden kann und auf Produktionsschwankungen (z.B. Verunreinigung, Restfeuchte und/oder Gesamtwassergehalt des Phosphorgipses, Temperaturschwankungen im Prozess, Wasserbilanz des Gesamtkomplexes, etc.) mit geeigneten Anpassungen der Reaktionsparameter reagiert werden kann.

Während der Behandlung von Schritt a) wird die Suspension bzw. das Reaktionsgemisch zur Einstellung der Gehalte an Verunreinigungen bevorzugt in Bewegung gehalten, zum Beispiel durch Zirkulieren, Rühren oder Einblasen von Gas.

Für den Schritt a) wird das in der Phosphorsäureproduktion generierte Kalziumsulfat aus der Trenneinheit, bevorzugt Filtrationseinheit, der Phosphorsäureproduktion einer Kalziumsulfat-Reaktionseinheit oder das Kalziumsulfat von einer Halde aus der Phosphorsäureproduktion zugeführt. Dort wird das Kalziumsulfat mit der zugesetzten Säure behandelt. Bei der Kalziumsulfat-Reaktionseinheit kann es sich um eine einfache Rühreinrichtung z.B. ein Rührbehälter handeln.

In Schritt b) des erfindungsgemäßen Verfahrens wird das gereinigte Kalziumsulfat nach der Behandlung als Feststoff von der flüssigen Phase der erhaltenen Suspension abgetrennt. Bei der erhaltenen Suspension kann es sich um eine Aufschlämmung handeln. Die Abtrennung von Feststoff bzw. gereinigtem Kalziumsulfat und flüssiger Phase aus der Suspension ist insbesondere eine mechanische Trennung und kann z.B. durch Zentrifugation oder Filtration erfolgen, wobei Filtration bevorzugt ist.

Das in Schritt b) erhaltene gereinigte Kalziumsulfat, wie es nach der Abtrennung erhalten wird, kann Dihydrat, Hemihydrat, Anhydrit oder in Form einer Mischung aus zumindest zwei der besagten Komponenten vorliegen, bevorzugt ist Kalziumsulfat in Form von Anhydrit. Die gewünschte Zusammensetzung des Kalziumsulfates ist abhängig von dem erforderlichen Maß der P₂O₅-Reduktion, wobei ein Zement-/Klinkerproduzent das erforderliche Maß der PzOs-Reduktion bestimmt. Durch die Behandlung mit Säure und anschließender Abtrennung von der flüssigen Phase kann insbesondere der Gehalt an Phosphor und Fluor im Kalziumsulfat reduziert werden, die als Verunreinigungen enthalten sind. Bei der abgetrennten flüssigen Phase handelt es sich in der Regel um eine säurehaltige wässrige Lösung, enthaltend unter anderem Wasser und P₂O₅.

In einer bevorzugten Ausführungsform enthält das in Schritt b) erhaltene abgetrennte gereinigte Kalziumsulfat mindestens 5 Gew.-%, bevorzugt mindestens 30 Gew.-%, bevorzugter mindestens 50 Gew.-% Anhydrit, bezogen auf trockenes Kalziumsulfat.

Der Dᵥ(50)-Wert der Korngrößenverteilung des in Schritt b) produzierten Kalziumsulfats, insbesondere Kalziumsulfat-Anhydrits, nach der Aufreinigung beträgt z.B. 0,5 - 100µm, besonders bevorzugt 1- 50pm, insbesondere 2-30µm. Definiert wird der Dᵥ(50) -Wert als Maß, bei welchem 50 Vol.-% der Partikel einen kleineren Durchmesser als den angegebenen Wert aufweisen.

In einer bevorzugten Ausführungsform wird in Schritt b) die flüssige Phase, die nach Abtrennung des Feststoffs erhalten wird, als Einsatzstoff in der Phosphorsäureproduktion verwendet. Die flüssige Phase bzw. das Filtrat kann in der existierenden Phosphorsäureproduktion, insbesondere in dem existierenden Phosphorsäure-Schwefelsäure-Komplex, als sogenannte "Recycle Acid" (Rücklaufsäure), die der Reaktionseinheit der Phosphorsäureproduktion für die Umsetzung mit dem Rohphosphat zugeführt werden kann, verwendet werden. Dadurch werden auch die aus dem Kalziumsulfat ausgewaschenen P und F-Anteile mit der flüssigen Phase bzw. dem Filtrat wieder in den Kreislauf der Phosphorsäure-Anlage geführt.

Für den Schritt b) wird die in der Kalziumsulfat-Reaktionseinheit enthaltene Suspension/Aufschlämmung in eine Kalziumsulfat-Trenneinheit überführt, in der die Flüssigkeit und der resultierende Feststoff (gereinigtes Kalziumsulfat) voneinander getrennt werden können. Die Trenneinheit kann z.B. eine Filtrationseinheit oder eine Zentrifugeneinheit sein, wobei eine Filtrationseinheit bevorzugt ist.

Als abgetrenntes gereinigtes und aufbereitetes Kalziumsulfat kann direkt das in Schritt b) erhaltene abgetrennte gereinigte Kalziumsulfat verwendet werden. Es ist aber auch möglich, dass das in Schritt b) erhaltene gereinigte Kalziumsulfat einer oder mehreren weiteren Reinigungsschritten unterworfen wird, insbesondere zur Entfernung von Seltenen Erden und gegebenenfalls zur Entfernung von radioaktiven Elementen und/oder Schwermetallen, wie z.B. Cd, Pb, Hg, bevor das gereinigte Kalziumsulfat dem Schritt c) zugeführt wird. Die optionalen zusätzlichen Reinigungsschritte werden nachstehend erläutert.

Das in Schritt c) verwendete gereinigte Kalziumsulfat weist bevorzugt einen P₂O₅-Gehalt von weniger als 0,5 Gew.-%, bevorzugt weniger als 0,25 Gew.-%, bevorzugter weniger als 0,05 Gew.-%, und einen Fluoridgehalt von weniger als 0,5 Gew.-%, bevorzugt weniger als 0,25 Gew.-%, bevorzugter weniger als 0,15 Gew.-%, noch bevorzugter weniger als 0,05 Gew.-% auf. Ein gereinigtes Kalziumsulfat mit dem genannten Reinigungsgrad hinsichtlich P₂O₅ und Fluor wird bevorzugt bereits nach Schritt b) erhalten. Durch den Reinigungsschritt gemäß der Schritte a) und b) und gegebenenfalls dem Reinigungsschritt zur Entfernung von Seltenen Erden können gegebenenfalls auch im Kalziumsulfat enthaltene, unerwünschte Schwermetalle und/oder radioaktive Elemente, insbesondere radioaktive Elemente, vollständig oder teilweise entfernt werden.

In Schritt c) des erfindungsgemäßen Verfahrens wird das abgetrennte gereinigte und aufbereitete Kalziumsulfat mit Zusatzstoffen und Reduktionsmittel vermischt, um eine Rohmehlmischung für die Zementklinkerproduktion zu erhalten. Das Kalziumsulfat wird dabei mit den erforderlichen Zusatzstoffen für die geforderte Zementklinkerqualität im richtigen Verhältnis vermischt. Wie bereits angeführt, sind der Müller-Kühne-Prozess und der OSW-Krupp-Prozess für die Umsetzung von Kalziumsulfat mit Zusatzstoffen und Reduktionsmittel zu Zementklinker und SOz bzw. Schwefelsäure seit langem bekannt. Weitere Einzelheiten hierzu können der Fachliteratur entnommen werden, z.B. Ullmann's Encyclopedia of industrial chemistry, 5. Auflage, 1986, Bd. A5, "Cement and Concrete ", p. 489-537, oder die Patentschrift AT 292539 B.

Allgemein wird Zementklinker aus einem als Rohmehl bezeichnetes Rohstoffgemisch hergestellt, dass Calciumoxid, Siliciumdioxid sowie Oxide von Aluminium und Eisen enthält, siehe z.B. Ullmann's Encyclopedia of industrial chemistry, 5. Auflage, 1986, Bd. A5, "Cement and Concrete", S. 489-537.

Komponenten zur Herstellung des Rohmehls in Schritt c) können, neben gereinigtem Phosphorgips, die dem Fachmann bekannten Zusatzstoffe für die Klinkerzusammensetzung sein, die dem Kalziumsulfat zugemischt werden, wobei in der Rohmehlmischung die Kalziumkomponente bevorzugt vollständig von dem abgetrennten gereinigten Kalziumsulfat gebildet wird. Vollständig schließt hier nicht aus, dass Kalzium in den Zusatzstoffen enthalten sein kann, wobei Kalzium bevorzugt nur in geringen Mengen in den Zusatzstoffen enthalten sein kann. Vollständig meint hier, dass mindestens 95 Gew.-%, bevorzugter mindestens 99 Gew.-%, noch mehr bevorzugt mindestens 99,9 Gew.-% der eingesetzten Kalziumkomponente, bevorzugt des im Zementklinker enthaltenen Kalziums, aus dem abgetrennten gereinigten Kalziumsulfat stammen. Daraus ergibt sich, das die eingesetzten Zusatzstoffe bevorzugt frei bzw. weitgehend frei von Kalzium sind. Es ist aber auch möglich, dass in den Zusatzstoffen Kalzium enthalten ist, z.B. im Al-Träger, Si-Träger und/oder Fe-Träger. Zusatzstoffe sind insbesondere Al-Träger, wie z.B. Bauxite, Tone und Tonsteine, Schiefer, etc., Fe-Träger, wie z.B. Eisenerze, Laterite, etc. und Si-Träger, wie z.B. Sande, Sandsteine, Quarzite, Tone und Tonsteine, Schiefer, etc. und ein oder mehrere Reduktionsmittel, wie z.B. einen Kohlenstoff- und/oder Kohlenwasserstoff-Träger, z.B. Kohle, Koks, Petrolkoks oder aus nachwachsenden Rohstoffen erzeugte Kohle/ Koks (Bio-Kohle/Koks) und/oder elementarer Schwefel. Weiterhin können neben dem gereinigten Kalziumsulfat ein oder mehrere weitere S-Träger, wie z.B. Dünnsäure, Säureharze, etc. zugesetzt werden.

Es versteht sich, dass die Art und die Menge der Zusatzstoffe so gewählt werden, dass sie zusammen mit dem Kalziumsulfat ein Rohmehl mit geeigneter chemischer Zusammensetzung für einen Zementklinker ergeben.

In einer bevorzugten Ausführungsform macht das für Schritt c) verwendete abgetrennte gereinigte Kalziumsulfat von Schritt b) mehr als 70 Gew.-%, bevorzugt mehr als 80 Gew.-%, bevorzugter mehr als 90 Gew.-%, des gesamten Kalziumsulfates in der Rohmehlmischung aus. Für den Rest des Kalziumsulfats in der in Schritt c) erhaltenen Rohmehlmischung, der nicht das in Schritt b) erhaltene abgetrennte gereinigte Kalziumsulfat ist, kann Kalziumsulfat von üblichen anderen Quellen eingesetzt werden.

Als Brennstoff eignen sich feste Brennstoffe, beispielsweise Kohle, Koks, Petrolkoks, feste Sekundärbrennstoffe bzw. Ersatzbrennstoffe, etc. sowie flüssige Brennstoffe, beispielsweise Öl, Schweröl, flüssige Sekundärbrennstoffe, etc. oder gasförmige Brennstoffe, beispielsweise Erdgas, Biogas, Wasserstoff, als auch eine Kombination aus vorgenannten Brennstoffen; insbesonders geeignet sind hierbei schwefelhaltige Brennstoffe.

Zusammen mit den vorgenannten Brennstoffen auf Kohlenstoff- und/oder Wasserstoff-Basis können feste bzw. hoch viskose Fraktionen schwefelhaltiger Kohlenwasserstoff-Träger, beispielsweise Destillationsrückstände, etc., als Brennstoff genutzt werden.

Additive und / oder Mineralisatoren zur beschleunigten Zersetzung des gereinigten Kalziumsulfates und / oder zur verbesserten Bildung von Klinkermineralien können ebenfalls zugesetzt werden.

Als Rohmehl für die Herstellung von Zementklinker wird die Mischung der Stoffe Kalziumsulfat, alle zementüblichen Zusatzstoffe und Additiven/Mineralisatoren incl. Reduktionsmittel bezeichnet.

Für die Rohmehlvorbereitung in Schritt c) wird das gereinigte Kalziumsulfat vorzugsweise auf eine gewünschte Restfeuchte getrocknet, z.B. in einem Trommeltrockner und/oder Flugsstromtrockner und/oder Wirbelschicht, wobei der Wassergehalt des getrockneten Kalziumsulfats z.B. unter 22 Gew.-%, bevorzugt 12 - 14 Gew.-%, bevorzugter unter 5 Gew.-%, noch mehr bevorzugt unter 1 Gew.-% liegt. Der Wassergehalt bezieht sich hier nur auf freies Wasser, eventuell vorhandenes Hydratwasser ist nicht berücksichtigt.

Das getrocknete Kalziumsulfat sowie alle übrigen Zusatzstoffe werden einem üblichen Lager und/oder Mischeinrichtung zugeführt. Hierfür kommen beispielsweise ein Längsmischbett und/oder Rundmischbett und/oder Wannenlager und/oder Freilager und/oder herkömmliche Silos, wie Tangentialmischsilo, Mehrzellensilo, Konussilo oder Mehrkammersilo zur Anwendung. Beispielsweise wird ein solches Mischbett in der DE 10252585 bzw. solche Silotypen die in der DE10118142 oder DE 10344040 näher beschrieben werden.

Die Rohmaterialien (Kalziumsulfat sowie Zusatzstoffe) werden separat oder gemeinsam auf die für den Klinkerprozess notwendige Feinheit vermahlen. Diese Zerkleinerung kann als Mahltrocknung ausgeführt werden, bei der Abwärme aus dem Prozess (z.B. vorgewärmte Gase) und / oder speziell zugeführte Wärme (z.B. Abgase eines Heißgaserzeugers) genutzt werden.

Für die Zerkleinerung kommen Zerkleinerungsaggregate wie wenigstens eine Vertikalrollenmühle und/oder eine Walzenpresse und/oder eine Rührwerkskugelmühle und/oder Kugelmühle und/oder Walzenschüsselmühle und/oder Stabmühle und/oder Magnetmühle zum Einsatz. Entsprechende Aggregate sind beispielsweise aus den Schutzrechten DE 102012111217, DE 102014108334 oder DE 102017114831 bekannt.

Die vermahlenen Rohmaterialien werden gemeinsam oder getrennt einem oder mehreren Silos zur Zwischenlagerung und / oder Homogenisierung zugeführt.

Die chemische Zusammensetzung der Rohmehlmischung wird vor Aufgabe auf den Klinkerprozess kontinuierlich überprüft und in Fall von Abweichungen von vorgegebenen Sollwerten durch Änderungen der Dosierungen korrigiert.

Das so vorbehandelte Rohmehl wird dosiert in die Klinkeranlage aufgegeben, ggf. zusammen mit Reduktionsmittel.

Das Reduktionsmittel dient zur Unterstützung der Abspaltung von SO₂ bei der thermischen Zersetzung des gereinigten Kalziumsulfates. Das Reduktionsmittel wird separat auf die notwendige Feinheit gebrochen und / oder vermahlen. Diese Zerkleinerung kann als Mahltrocknung ausgeführt werden. Das so vorbereitete Reduktionsmittel wird zusammen mit dem vorbehandelten Rohmehl der Klinkeranlage und/ oder separat an einer oder mehreren Stellen der Klinkeranlage zugeführt.

Alternativ kann das Rohmehl bei einem Flüssigkeitsanteil der Mischung von 9 Gew.-% - 22 Gew.-%, vorzugsweise zwischen 12 Gew.-% - 14 Gew.-%, einer formgebenden Einrichtung zur Erzeugung von Agglomeraten zugeführt werden. Diese Agglomerate können in einer separaten Einrichtung getrocknet und zwischengelagert werden. Das so agglomerierte Rohmehl wird dann der Vorwärmeinrichtung und dem Brennprozess zugeführt. Die Agglomerate weisen eine Größe von mehr als 250µm, vorzugsweise mehr als 500µm, bis in den niedrigen mm Bereich auf. Als formgebenden Einrichtung können beispielsweise fungieren eine Presse und/oder ein Teller und/oder eine Trommel und/oder ein mechanischer Wirbelbettreaktor und/oder ein formgebender Rührwerksmischer.

In Schritt d) des erfindungsgemäßen Verfahrens wird das Rohmehl, das in Schritt c) hergestellt wird, durch einen thermischen Prozess, insbesondere in einer Zementklinker-Prozesseinheit, in Zementklinker umgewandelt, wobei Schwefeldioxid als Abgas gebildet wird. Der in Schritt d) erzeugte Zementklinker kann zur Zementherstellung verwendet werden.

In Schritt d) wird das Rohmehl vorzugsweise mit Prozessgasen aus dem Brenn- bzw. Kühlprozess zur Verringerung des Energieverbrauchs auf eine Temperatur von bis zu 800°C vorgewärmt und dabei anhaftende Oberflächenfeuchte ausgetrieben und die Zusatzstoffe zumindest teilweise kalziniert.

Bei weiterer Vorwärmung oberhalb von 800°C wird der Hauptteil des Kalziumsulfates unter Einwirkung des Reduktionsmittels zersetzt.

Die Vorwärmung und Zersetzung des Rohmehls kann z.B. in einem Wärmetauscher, vorzugsweise einem Flugstromwärmetauscher, durchgeführt werden. Die Zersetzung des Rohmehls findet in Abhängigkeit der Temperatur nicht oder nur sehr begrenzt im Wärmetauscher statt. Die Austreibung von SO₂ erfolgt üblicherweise erst ab ca. 1000 °C.

Das SO₂ haltige Prozessgas wird dabei bevorzugt nach der Vorwärmeinrichtung durch ein Abscheidesystem abgesondert und einem Verwertungsprozess wie beispielsweise einer Schwefelsäureanlage zugeführt.

In einem nachfolgenden Schritt erfolgt die finale Zersetzung des Rohmehls und anschließende Bildung des Zementklinkers (Klinkerbrand); die Prozessgase dieses Schrittes werden dem Wärmetauscher zugeführt. Dieses Brennen des Rohmehls erfolgt in einem Ofen, vorzugsweise einem Drehrohrofen. Die Brenntemperatur zur Zementklinkerherstellung kann z.B. im Bereich von 1200°C bis 1600 °C liegen, bevorzugt bei einer Temperatur von 1200°C bis zu 1500°C. Die Brenndauer kann z.B. 5 Minuten bis 60 Minuten betragen.

In einer bevorzugten Ausführungsform wird das Rohmehl mit Prozessluft mit einem Sauerstoffanteil von mehr als 21 Vol.-%, bevorzugt mehr als 30 Vol.-%, bevorzugter mehr als 50 Vol.-%, und bis zu 100 Vol.-%, gebrannt. Entsprechende Prozessluft kann leicht durch Zumischen von Sauerstoff hergestellt werden. Hierbei ist eine besonders bevorzugte Ausführungsform der Oxyfuel-Prozess. Einzelheiten des Oxyfuel-Prozesses werden z.B. in EP 2449328 A1, EP 1037005 B1, WO 2019-211196 A1, WO 2019-211202 A1 oder JP 2007-126328 A beschrieben, worauf Bezug genommen wird.

Durch den Einsatz von mit Sauerstoff angereicherter Prozessluft kann die SO₂-Konzentration im Prozessgas erhöht werden, dies erleichtert die Gewinnung von Schwefelsäure aus SO₂-haltigen Gasen. Unterstützt durch weitere Maßnahmen zur Steigerung der SO₂-Konzentration im Prozessgas kann so eine bevorzugte SOz-Konzentration im Prozessgas von 13 - 15%, bevorzugter von 18 - 20 % erreicht werden.

Die oben erwähnte Prozessluft kann im Vorfeld zum Kühlen des gebrannten Materials genutzt worden sein. Ebenso ist es denkbar, dass diese Prozessluft dem Ofen direkt zugeführt wird. Vorstellbar wäre ebenfalls, dass das Prozessgas an einem Bypass-System und/oder aus dem Flugstromreaktor wenigstens teilweise abgezogen wird, anschließend mit Sauerstoff angereichert und dem Brennprozess wieder zugeführt wird.

Der aus dem Ofen kommende Klinker wird vorzugsweise durch ein geeignetes Kühlsystem auf eine Temperatur von unter 120°C, vorzugsweise unter 100°C, abgekühlt. Die Kühlerabluft kann wenigstens teilweise dem Brennprozess und/oder dem Vorwärmprozess und/oder der Rohmehlherstellung und/oder der Kalziumsulfat-Trocknung zugeführt werden. Die dem Kühlsystem zugeführte Prozessluft kann, zumindest teilweise, mit Sauerstoff angereichert sein. Vorstellbar wäre ebenfalls, dass wenigstens ein Teil der Kühlerabluft zur Stromerzeugung genutzt wird. Das durch den Kühlprozess abgekühlte Material wird nach möglichen weiteren Prozessschritten einer Lager- und/oder Verpackungseinrichtung zugeführt.

Der so produzierte Zementklinker kann weiter zu Zement verarbeitet werden. Der nach diesem Verfahren hergestellte Zementklinker bzw. Zement weist einen geringeren COz-Fußabdruck auf als ein üblicher, auf Basis karbonathaltiger Gesteine hergestellter Klinker bzw. Zement.

Die oben erwähnten Prozesse, wie z.B. der Einsatz von Phosphorgips als CO₂-neutrales Rohmaterial und die Verwendung des Oxyfuel-Prozesses senken den COz-Fußabdruck der Zementanlage. Weiterhin kann die Verwendung von wenigstens teilweise regenerativem Strom zum Betrieb der Anlageteile den CO₂-Fußabdruck weiter absenken.

In Schritt e) des erfindungsgemäßen Verfahrens wird das in Schritt d) gebildete Schwefeldioxid als Rohstoff einer Schwefelsäureproduktion zugeführt, um Schwefelsäure herzustellen, z.B. nach dem Single-Contact oder Double-Contact Verfahren. Die Schwefelsäureproduktion auf Basis von SOz ist dem Fachmann bestens bekannt. Einzelheiten hierzu können der Fachliteratur entnommen werden, z.B. Handbook of Sulphuric Acid Manufacturing, von Douglas K. Louie, 2. Auflage, 2008, herausgegeben durch DKL Engineering oder Ullmann's Encyclopedia of industrial chemistry, 5. Auflage, 1994, Bd. A25, "Sulfuric Acid and Sulfur Trioxide", S. 635-705.

Die in Schritt e) hergestellte Schwefelsäure kann z.B. in der Phosphorsäureproduktion als Einsatzmaterial für die Umsetzung mit dem Rohphosphat verwendet werden. Alternativ kann die produzierte Schwefelsäure je nach Bedarf einer weiteren bzw. anderen Nutzung zugeführt werden. Das behandelte Schwefeldioxid-Gas kann optional der in der Phosphorsäureproduktion existierenden oder einer neuen Schwefelsäureproduktionsanlage zugeführt werden.

In einer bevorzugten Ausführungsform wird das Schwefeldioxid, das in Schritt d) als Abgas aus der Zementklinker-Prozesseinheit abgeleitet wird, einer Schwefeldioxid-Abgasbehandlung zugeführt, bevor es der Schwefelsäureproduktion gemäß Schritt e) zugeführt wird. Bei der Abgasbehandlung handelt es sich bevorzugt um eine Abgasreinigung, um Feststoffpartikel und Restfeuchtigkeit aus dem SOz-Gas zu entfernen.

Bei der optionalen Abgasreinigung verlässt das zu reinigende Schwefeldioxid die Klinkerprozesseinheit vorzugsweise mit einer Temperatur von 200 °C bis 450 °C. Gegebenenfalls wird das zu reinigende Schwefeldioxid in einer Kühleinheit auf diese Temperatur vorgekühlt.

Die Reinigung des Schwefeldioxids vor Schritt e) kann eine Trockenabscheidung von Partikeln umfassen (optionaler Schritt 1)). Vorzugsweise werden in diesem Schritt Partikel mit einer Größe von größer als 100 µm abgeschieden.

Die Reinigung des Schwefeldioxids kann ferner die folgenden optionalen Schritte 2), 3) und/oder 4) umfassen. Schritt 2) umfasst eine Nassabscheidung, vorzugsweise um Partikel mit einer Größe von 20 bis 100 µm abzuscheiden. Schritt 3) umfasst eine optionale Abtrennung, vorzugsweise eine Trockenabscheidung, von Partikeln, vorzugsweise mit einer Größe kleiner als 20 µm. Schritt 4) umfasst eine optionale Abtrennung von Stickoxiden aus dem Schwefeldioxidgas.

Die Trockenabscheidung von Partikeln aus dem Schwefeldioxid in den Schritten 1) und/oder 3) kann mittels eines Zyklons, Drehströmungsabscheiders und/oder Trocken-Elektrofilters vorgenommen werden. Die Nassabscheidung von Partikeln aus dem Schwefeldioxid in Schritt 2) kann z.B. mittels eines Venturi-Wäschers, Quencher/Kolonnenwäscher und/oder Nass-Elektrofilters vorgenommen werden.

Die Restfeuchte, die nach der Nassabscheidung in dem Schwefeldioxid vorhanden sein kann, kann durch Kondensation abgetrennt werden. Die Abtrennung von Stickoxiden aus dem Schwefeldioxid in Schritt 4) kann mittels Zersetzung der Stickoxide zu N₂ und H₂O erfolgen. Hierfür nutzbare Verfahren sind dem Fachmann bekannt und beispielsweise beschrieben in Handbook of Sulphuric Acid Manufacturing, von Douglas K. Louie, 2. Auflage, 2008, herausgegeben durch DKL Engineering.

Die Zersetzung der Stickoxide erfolgt dabei vorzugsweise durch Gasbehandlungsverfahren wie selektive katalytische Reduktion, selektive nichtkatalytische Reduktion und/oder durch Wäschertechnologien, oder durch nasschemische Umsetzung in der flüssigen Phase im Schwefelsäureprozess.

Der Begriff selektive katalytische Reduktion (SCR) bezeichnet eine Technik zur Reduktion von Stickoxiden in Abgasen. Die chemische Reaktion am SCR-Katalysator ist selektiv, das heißt, dass bevorzugt die Stickoxide (NO, NOz) reduziert werden, während unerwünschte Nebenreaktionen weitgehend unterdrückt werden.

Vorzugsweise wird für die Reaktion Ammoniak dem Abgas zugemischt. Die Produkte der Reaktion sind Wasser (H₂O) und Stickstoff (N₂). Bei der Reaktion handelt es sich um eine Komproportionierung der Stickoxide mit Ammoniak zu Stickstoff. Es können zwei Arten von Katalysatoren eingesetzt werden: Die erste besteht vorzugsweise hauptsächlich aus Titandioxid, Vanadiumpentoxid und Wolframdioxid, die andere verwendet vorzugsweise Zeolithe.

In einer optionalen Variante des erfindungsgemäßen Verfahrens umfasst das Verfahren einen zusätzlichen Reinigungsschritt für das nach Schritt b) erhaltene Kalziumsulfat, der durchgeführt wird, bevor das Kalziumsulfat mit den Zusatzstoffen und Reduktionsmittel gemäß dem Schritt c) vermischt wird. Bei diesem zusätzlichen Reinigungsschritt können Metalle der Seltenen Erden aus dem Kalziumsulfat ausgewaschen werden, die gegebenenfalls als Verunreinigung enthalten sind.

Bei dem optionalen zusätzlichen Reinigungsschritt zur Entfernung von Seltenen Erden aus dem Kalziumsulfat vor Zuführung zu Schritt c) wird das in Schritt b) erhaltene gereinigte Kalziumsulfat vorzugsweise mit einer Flüssigkeit, vorzugsweise Wasser oder mit einer wässrigen Lösung, die Salz und/oder Chelatligand enthält, behandelt (optionaler Schritt b1). Nach der Behandlung wird von der so erhaltenen Suspension das Kalziumsulfat als Feststoff von der flüssigen Phase abgetrennt (optionaler Schritt b2). Das so weiter gereinigte und abgetrennte Kalziumsulfat wird dann dem Schritt c) zugeführt. Die flüssige Phase enthält eine oder mehrere Seltene Erden als gelöste Ionen und kann zur Gewinnung der Seltenen Erden einer weiteren Aufbereitung zugeführt werden. Beispielsweise umfasst diese Aufbereitung die Überführung schwerlöslicher Selten Erd-Sulfate in lösliche Formen.

In dem optionalen Schritt b1) wird für die Lösung der Seltenen Erden aus dem Kalziumsulfat als Flüssigkeit bevorzugt eine wässrige Lösung eingesetzt, die ein Salz und/oder einen Chelatliganden in einer Konzentration von 1 bis 50 Gew.-%, vorzugsweise von 1 bis 20 Gew.-%, besonders bevorzugt von 5 bis 10 Gew.-%, umfasst. Es ist auch möglich, dass die Seltenen Erden in Schritt b1) durch Zugabe von Wasser als Flüssigkeit aus dem Kalziumsulfat gelöst werden.

Das für die Lösung der Seltenen Erden aus dem Phosphorgips in Schritt b1) eingesetzte Salz umfasst oder ist bevorzugt ein Chlorid und/oder ein Nitrat und/oder enthält einen Chelatliganden. Der Chelatligand ist dabei prinzipiell nicht limitiert, sondern umfasst alle Chelatliganden, die mit mindestens einer der Seltenen Erden einen löslichen Komplex bilden. Bevorzugte Chelatliganden umfassen Ethylendiamintetraessigsäure (EDTA), Diethylentriaminpentaessigsäure (DTPA) und/oder Citronensäure und/oder deren entsprechenden Salze.

Als Salze kommen hier insbesondere die Natrium-, Ammonium-, Kalzium-, Magnesium- und Kaliumsalze mit den Anionen Chlorid, Nitrat, Acetat, Bromid, Bromat, Perchlorat und Iodid in Frage. Es hat sich auch gezeigt, dass in bestimmten Fällen der Einsatz von Ammoniumsulfat zielführend sein kann. Das Nitrat kann dabei auch in Form von, vorzugsweise verdünnter, Salpetersäure in Schritt b1) eingebracht werden.

Die Verweilzeit für die Lösung der Seltenen Erden aus dem Phosphorgips in Schritt b1) beträgt bevorzugt 20 min bis 80 h, vorzugsweise 1h bis 76h oder 2h bis 72h, besonders bevorzugt 3h bis 70h und ganz besonders bevorzugt 4h bis 68 h, insbesondere 5h bis 68h oder 5h bis 64h.

Vorzugsweise wird das Reaktionsgemisch in Schritt b1) während der Reaktionszeit in Bewegung gehalten. Vorzugsweise wird das Reaktionsgemisch in Schritt b1) während der Reaktionszeit durch Zirkulieren, Rühren oder Einblasen von Gas in Bewegung gehalten.

Vorzugsweise wird die Reaktion in Schritt b1) bei einer Temperatur von 10 bis 100°C, vorzugsweise von 15 bis 80°C und ganz besonders bevorzugt von 20 bis 75 °C, insbesondere von 20 bis 60°C durchgeführt. Bevorzugt kann die die Reaktion in Schritt b1) ohne zusätzliches Aufheizen oder Kühlen auch bei Raumtemperatur durchgeführt werden.

Das Gewichtsverhältnis von Feststoff zu Flüssigkeit (S/L-Verhältnis) für die Lösung der Seltenen Erden aus dem Phosphorgips in Schritt b1) kann 1 zu 1 bis 1 zu 10 betragen und liegt vorzugsweise im Bereich von 1 zu 2 bis 1 zu 5.

Die Abtrennung des weiter gereinigten Phosphorgipses als Feststoff von der flüssigen Phase, enthaltend eine oder mehrere Seltene Erden, in dem optionalen Schritt b2) umfasst bevorzugt eine Zentrifugation, Filtration, Sedimentierung und/oder ein Verdampfen der flüssigen Phase.

Die Seltenen Erden werden bevorzugt mittels Solvent-Solvent Extraktion, Ionentauscherverfahren, Ausfällung als Hydroxide, Oxalate, Carbonate und/oder Phosphate aus der Lösung, enthaltend eine oder mehrere Seltene Erden, die in Schritt b2) erhalten wurde, gewonnen werden. Als geeignete Ionentauschverfahren sind hier insbesondere Kationenaustauschverfahren oder eine Kombination aus Kationentauscher und Anionentauscher zu nennen.

Der in Schritt b2) abgetrennte Phosphorgips kann z.B. eine Feuchtigkeit von 0 bis 60 Gew.-%, vorzugsweise von 5 bis 50 und besonders bevorzugt von 10 bis 40 Gew.-%, aufweisen. Mit diesem Feuchtigkeitsgehalt kann der Phosphorgips dann Schritt c) zugeführt werden. Es sind jedoch auch Verfahrensführungen denkbar, wobei eine Aufschlämmung oder eine Suspension von Kalziumsulfat in Schritt b2) erhalten und weiterverarbeitet wird.

Das erfindungsgemäße Verfahren kann ferner dazu dienen, radioaktive Elemente und/oder Schwermetalle zu entfernen. Das erhaltene gereinigte Kalziumsulfat nach Schritt b) zeigt insbesondere bei geeigneter Einstellung der Reaktionsbedingungen (S/L-Verhältnis, Verweilzeit, Konzentration der Säure und Temperatur) eine deutliche Abreicherung an radioaktiven Elementen, wie z.B. Thorium und Uran. Bei dem weiteren optionalen Reinigungsschritt zur Gewinnung von Seltenen Erden können des Weiteren Schwermetalle (und weitere radioaktive Bestandteile), wie z.B. Cadmium und Blei durch geeignete Wahl des Aufbereitungsschritts entfernt werden. Das gereinigte Kalziumsulfat kann vor der Zuführung zu Schritt c) daher einen reduzierten Gehalt an Phosphor und Fluor und gegebenenfalls an Seltenen Erden, radioaktiven Elementen und/oder Schwermetallen aufweisen. Es versteht sich, dass der reduzierte Gehalt des jeweiligen Elements sich auf den Vergleich zum Gehalt des jeweiligen Elements in dem Kalziumsulfat bezieht, das dem Schritt a) zugeführt wird.

Der integrative Ansatz bzw. das integrative Verfahren der Erfindung ist insbesondere gekennzeichnet durch die folgenden Merkmale bzw. Vorteile:
- Der Prozess zur Herstellung von Zementklinker bzw. Zement kann hinsichtlich der Ausgangsqualität des Phosphorgipses flexibel und in Kombination mit dem Phosphorsäureprozess geführt werden,
- Die aus dem SO₂-Abgas hergestellte Schwefelsäure kann in den Gesamtkomplex eingebracht und verbraucht sowie erzeugt und beispielsweise im Kreis geführt werden
- Folgende verfahrenstechnische Prozesse können beispielsweise in ihrer Gesamtheit oder optional für die Herstellung von Zementklinker/Zement und Schwefelsäure aus Kalziumsulfat kombiniert werden:
   ∘ Chemische und thermische Modifikation des Phosphorsäureprozesses zur zielgerichteten Produktion einer für den Zementklinkerprozess geeigneten Phosphorgipsqualität,
   ∘ Mechanische Abtrennung des Phosphorgips aus dem laufenden Phosphorsäureprozess, zum Beispiel durch Zentrifugieren, Filtrieren, Verdampfen oder Absetzen/Sedimentieren des Kalziumsulfat-/Phosphorgips-Schlamms,
   ∘ Chemisch-thermische und mechanische Abtrennung von Phosphor aus dem Phosphorgips, zum Beispiel durch chemische Umwandlung, Rekristallisation, Fällung, Flockung,
   ∘ Chemisch-thermische und mechanische Abtrennung von Fluor aus dem Phosphorgips, zum Beispiel durch chemische Umwandlung, Rekristallisation, Fällung, Flockung,
   ∘ Chemisch-thermische und mechanische Abtrennung von radioaktiven Komponenten aus dem Phosphorgips, zum Beispiel durch chemische Umwandlung unter Heizen/Kühlen, Rekristallisation, Fällung, Flockung,
   ∘ Chemisch-thermische und mechanische Abtrennung von Schwermetallen aus dem Phosphorgips, zum Beispiel durch chemische Umwandlung unter Heizen/Kühlen, Rekristallisation, Fällung, Flockung,
   ∘ Chemisch-thermische und mechanische Abtrennung von Seltenen Erden aus dem Phosphorgips, zum Beispiel durch chemische Umwandlung unter Heizen/Kühlen, Rekristallisation, Fällung, Flockung,
   ∘ Chemische und/oder thermische und/oder mechanische Entwässerung des Phosphorgips, zum Beispiel durch Heizen/Kühlen, Flockung und Fällung, Filtration,
   ∘ Mechanische Behandlung des trockenen Phosphorgips, zum Beispiel durch Zerkleinern, Sichtung,
   ∘ Mischen des Phosphorgips mit Additiven zu einer Rohmehlmischung zur Erzielung von spezifischen und handelsüblichen Zementklinker-/Zementqualitäten,
   ∘ Thermische und mechanische Trennung des Schwefeldioxids aus der Rohmehlmischung im Rahmen des Brennprozesses bei der Zementklinkerproduktion,
   ∘ Thermische und chemische Umwandlung der Rohmehlmischung in Zementklinker,
   ∘ Chemische und mechanische Umwandlung des Zementklinkers in handelsübliche Zementqualität,
   ∘ Trocken- und nasschemische Reinigung des abgetrennten Schwefeldioxid-haltigen Abgases, zum Beispiel durch Elektrofiltration, Absorption,
   ∘ Chemisch und thermische Modifikation des Schwefelsäureprozesses zur Einbindung und Verwendung des generierten Schwefeldioxids in Anlagen zur Erzeugung von Schwefelsäure,
   ∘ Chemische Umwandlung des gereinigten Schwefeldioxid-haltigen Abgases in Schwefelsäure handelsüblicher und im Phosphorsäureprozess wiederverwendbarer Qualität, zum Beispiel nach dem Single-Contact oder Double-Contact Verfahren.

Je nach vorliegender Qualität des eingesetzten Kalziumsulfats müssen die Herstellungsverfahren in der Wahl der verfahrenstechnischen Prozesse und Parameter flexibel gewählt und aufeinander abgestimmt werden. Die aus dem Phosphorsäureprozess erzielte Qualität des Kalziumsulfats ist abhängig von Faktoren wie eingesetztes Rohphosphat und Prozessbedingungen bei dem Aufschluss des Rohphosphats mit Schwefelsäure.

Der Umfang der Reinigung, insbesondere hinsichtlich der Reduzierung des Gehalts an Phosphor und/oder Fluor, des Kalziumsulfats in Schritt a) kann unter Berücksichtigung der Verunreinigungen, der in den eingesetzten Zusatzstoffen enthalten sind, und der für den Zementklinker einzuhaltenden Richtwerte an Phosphor und Fluor, eingestellt werden. Die Richtwerte für Phosphor sind bevorzugt maximal 1,0 Gew.-%, bevorzugter maximal 0,5 Gew.-%, noch bevorzugter maximal 0,1 Gew.-% P₂O₅ und/oder die Richtwerte für Fluor sind bevorzugt maximal 0,5 Gew.-%, bevorzugter maximal 0,25 Gew.-%, noch bevorzugter maximal 0,1 Gew.-% F. Dies ist aufgrund des integrativen Ansatzes möglich, da alle Prozessschritte gemeinsam unter Berücksichtigung ihrer jeweiligen Anforderungen betrachtet werden. Die Einstellung des Reinigungsumfangs kann durch die Anpassung der Parameter in Schritt a), wie z.B. S/L-Verhältnis, Konzentration der Säure, Behandlungstemperatur und -dauer, erfolgen, wobei eine optimale Behandlungsdauer bevorzugt durch direkte und/oder indirekte Ermittlung der Abnahme der Säurekonzentration bestimmt wird.

Der Flüssigkeitshaushalt, insbesondere der Wasserhaushalt, der Phosphorsäureproduktion wird durch das integrierte Verfahren nicht oder nur unwesentlich geändert, insbesondere da der Flüssigkeitseinsatz, insbesondere Wassereinsatz, zur Reinigung des Kalziumsulfats im Verfahren gemäß Schritt a) an den Flüssigkeitshaushalt, insbesondere Wasserhaushalt, der Phosphorsäureproduktion gekoppelt werden kann. Der Flüssigkeitshaushalt bzw. Wasserhaushalt der Phosphorsäureproduktion umfasst die Flüssigkeit bzw. das Wasser, die bzw. das der Produktion zugeführt wird, und die Flüssigkeit bzw. das Wasser, die bzw. das aus der Produktion ausgeschleust wird. Änderungen im Flüssigkeitshaushalt, insbesondere Wasserhaushalt, haben einen signifikanten Einfluss auf die Effizienz der Prozessschritte in der Phosphorsäureproduktion.

Die Erfindung betrifft auch eine Anlage zur Herstellung von Schwefelsäure und Zementklinker unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und abgetrennt wird, wobei die Anlage folgende Einrichtungen umfasst:
a) eine Kalziumsulfat-Reaktionseinheit, die geeignet ist, um darin das von der Phosphorsäure abgetrennte Kalziumsulfat mit einer Säure zu behandeln, um eine Suspension mit gereinigtem Kalziumsulfat zu erhalten,
b) eine Kalziumsulfat-Trenneinheit, die geeignet ist, um das gereinigte Kalziumsulfat als Feststoff von der flüssigen Phase der erhaltenen Suspension abzutrennen,
c) eine Rohmehl-Mischeinheit, die geeignet ist, um darin das abgetrennte gereinigte Kalziumsulfat mit Zusatzstoffen und Reduktionsmittel zu vermischen, um eine Rohmehlmischung für die Zementklinkerproduktion zu erhalten, wobei in der Rohmehlmischung die Kalziumkomponente für den Zementklinker vorzugsweise vollständig von dem abgetrennten gereinigten Kalziumsulfat gebildet wird,
d) eine Zementklinker-Produktionseinheit, beispielsweise eine Kombination aus Vorwärmeinheit, einer Brenneinheit sowie zumindest einer Kühleinheit, die geeignet ist, die Rohmehlmischung vorzuwärmen, zu brennen und zu kühlen, um den Zementklinker zu erhalten, wobei Schwefeldioxid als Abgas gebildet wird, und
e) eine Schwefelsäure-Produktionsanlage, zu der das in der Zementklinker-Produktionseinheit gebildete und gegebenenfalls gereinigte Schwefeldioxid-Abgas als Rohstoff zugeführt wird, um Schwefelsäure herzustellen, wobei die Schwefelsäure-Produktionsanlage ein Teil der Phosphorsäureproduktionsanlage oder eine externe Schwefelsäure-Produktionsanlage und/oder eine andere Nutzung sein kann.

Die Anlage kann für das vorstehend beschriebene erfindungsgemäße Verfahren verwendet werden. Für Angaben zu den einzelnen Einrichtungen bzw. Einheiten wird auf die vorstehenden Angaben hierzu verwiesen. Die vorstehenden Angaben für das Verfahren gelten entsprechend für die Anlage.

Es ist bevorzugt, dass bei der erfindungsgemäßen Anlage die Kalziumsulfat-Trenneinheit fluidisch, beispielsweise über eine Rohrleitung, mit der Phosphorsäureproduktionsanlage verbunden ist, damit die in der Kalziumsulfat-Trenneinheit erhaltene flüssige Phase als Einsatzstoff in die Phosphorsäureproduktion eingebracht werden kann.

Es ist bevorzugt, dass bei der erfindungsgemäßen Anlage das abgetrennte Kalziumsulfat für Schritt a) von einer Trenneinheit der Phosphorsäureproduktion, die die Phosphorsäure von dem Kalziumsulfat trennt, oder von einer Halde von Kalziumsulfat aus der Phosphorsäureproduktion zugeführt werden kann.

Das erfindungsgemäße Verfahren und die erfindungsgemäße Anlage können gegebenenfalls ferner folgende optionale und bevorzugte Prozessschritte und/oder Elemente umfassen:
- dem Wärmeprozess zur Herstellung des Zementklinkers oder Zements werden weitere COz neutrale Stoffe zugeführt,
- die COz neutralen Stoffe dienen alleine für sich oder gemeinsam für einen COz neutralen und/oder COz armen Klinker bzw. Zement,
- der erhaltene Klinker bzw. Zement weist gegenüber dem nach dem Stand der Technik hergestellten Produkt eine COz Einsparung auf,
- das für das Verfahren eingesetzte Kalziumsulfat bzw. Phosphorgips war vor seinem Einsatz ein Abbauprodukt und/oder ein Abfallprodukt,
- als Energiequellen, die für die Herstellung des Zementklinkers benötigt werden, werden wenigstens teilweise regenerative Energiequellen eingesetzt,
- die an unterschiedlichen Stellen des Prozesses entstehenden Heißgase können wenigstens teilweise zur Stromerzeugung genutzt werden,
- die Anlage steht mit wenigstens einer Sauerstoffquelle in Verbindung, um der Zementklinker-Produktionseinheit, insbesondere dem darin enthaltenen Brennofen, ein mit Sauerstoff angereichtes Gas zuzuführen
- wenigstens ein Bereich der Zementklinker-Produktionseinheit der Anlage steht mit Anlagenteilen im Verbund, welche für regenerativen Energiequellen stehen.
- die Anlage ist mit einer Schwefelsäureherstellungsanlage und/oder einer Phosphorsäureherstellungsanlage integriert,
- bei dem Verfahren wird ein Zementklinker gebildet, der nach Massenanteilen zu mindestens zwei Dritteln aus Calciumsilicaten (3CaO x SiOz und 2CaO x SiO₂) besteht, mit einem Massenverhältnis CaO/SiO₂ von mindestens 2,0.

Nachfolgend wird die Erfindung anhand von Ausführungsbeispielen beschrieben, die anhand der Figuren näher erläutert werden. Die Ausführungsbeispiele sollen den Umfang der beanspruchten Erfindung in keiner Weise beschränken.
- Fig. 1: zeigt ein schematisches Fließbild zur Verwertung von Kalziumsulfat aus der Phosphorsäureproduktion mithilfe eines integrierten Komplexes zur Herstellung von Zementklinker und Schwefelsäure.
- Fig. 2: zeigt ein schematisches Fließbild zur Verwertung von Kalziumsulfat aus der Phosphorsäureproduktion mithilfe eines integrierten Komplexes zur Herstellung von Zementklinker und Schwefelsäure wie in Fig. 1, wobei zusätzlich alternative oder zusätzliche Prozessschritte gezeigt sind.
- Fig. 3: ist eine grafische Darstellung der Säurekonzentration über die Verweilzeit des Gipses des Gipses PG B in Schwefelsäure von Beispiel 9.
- Fig. 4: ist eine grafische Darstellung der Säurekonzentration (linke Achse), des Anhydrit-Gehalts (rechte Achse) und der Auslaugungseffizienz hinsichtlich P₂O₅-Gehalt (rechte Achse) über die Verweilzeit des Gipses PG B in Schwefelsäure von Beispiel 9.
- Fig. 5: ist eine grafische Darstellung der Säurekonzentration über die Verweilzeit des Gipses PG A in Schwefelsäure von Beispiel 10.
- Fig. 6: ist eine grafische Darstellung der Zusammensetzung der Mineralogie (linke Achse) und der Auslaugungseffizienz hinsichtlich P₂O₅-Gehalt (rechte Achse) über die Verweilzeit des Gipses PG A in Schwefelsäure von Beispiel 10.

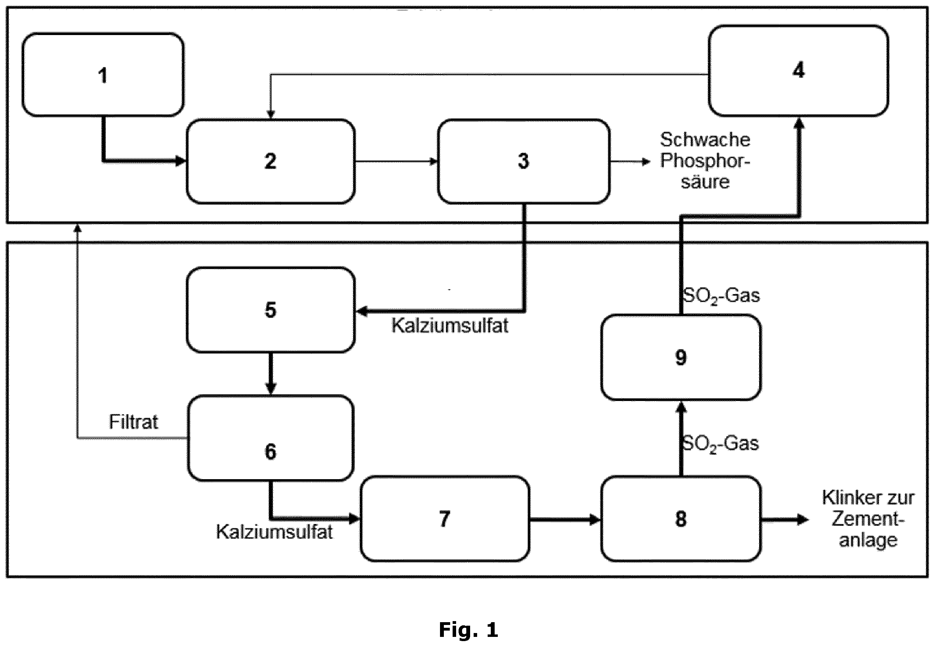

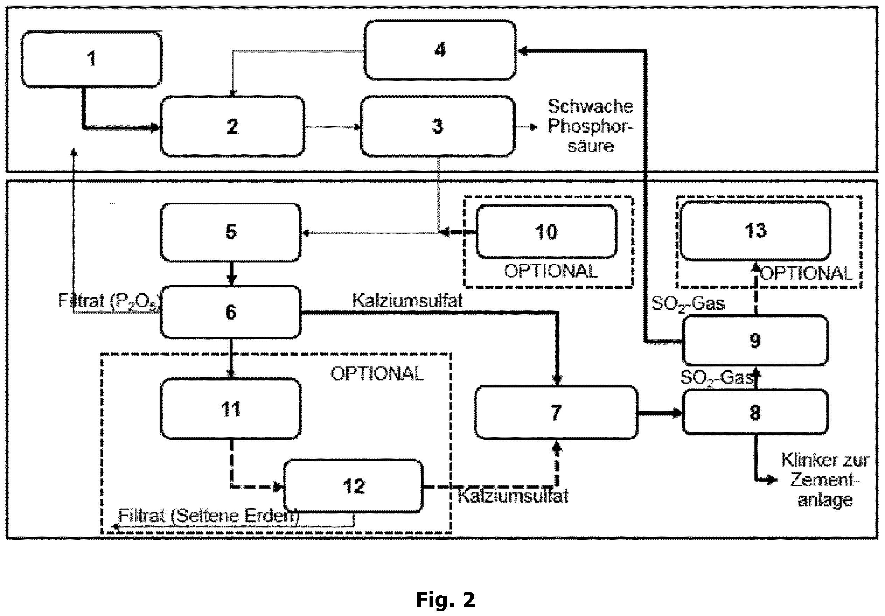

Fig. 1 zeigt ein Fließbild einer Phosphorsäureproduktion (existierender Komplex) und ein integriertes Verfahren zur Herstellung von Zementklinker und Schwefelsäure aus Kalziumsulfat, der von der Phosphorsäureproduktion stammt (integrierter Komplex). In einer Aufbereitungseinheit Phosphatgestein 1 wird das Phosphatgestein aufbereitet, um den Rohphosphat zu erhalten. Der Rohphosphat wird in der Reaktionseinheit der Phosphorsäureanlage 2 mit aus der Schwefelsäureproduktionsanlage stammender Schwefelsäure umgesetzt, um Phosphorsäure und festes Kalziumsulfat als Nebenprodukt zu bilden. Das in der Phosphorsäureproduktion generierte Kalziumsulfat wird in der Filtrationseinheit 3 der Phosphorsäureanlage von der Phosphorsäure abgetrennt und der Kalziumsulfat-Reaktionseinheit 5 zugeführt. Dort wird das Kalziumsulfat mit Säure behandelt, so dass nach der Behandlung z.B. eine 1-12 molare Säure, insbesondere eine 1-12 molare Schwefelsäure, erhalten wird. Beispielsweise kann eine 1-12 molare Schwefelsäure zur Behandlung zugesetzt werden. Die Behandlung kann nach Zugabe der Säure z.B. bei einer Temperatur von 15-100°C für 5 bis 120 min durchgeführt werden, wobei die erhaltene Suspension vorzugsweise bewegt wird, z.B. durch Rühren. Dabei werden die Verunreinigungen im Kalziumsulfat, die den nachgeschalteten Zementklinkerprozess und die Zementqualität negativ beeinflussen, auf den vom Zementklinkerprozess geforderten Gehalt reduziert. In einer Kalziumsulfat-Trenneinheit 6, die bevorzugt eine Filtrationseinheit ist, werden die Flüssigkeit und der resultierende Feststoff voneinander getrennt. Die Flüssigkeit, insbesondere das Filtrat, kann in dem existierenden Phosphorsäure-Schwefelsäure-Komplex verwendet werden. Das behandelte Kalziumsulfat wird der für den Zementklinkerprozess vorgeschalteten Rohmehl-Zubereitungseinheit 7 zugeführt. Dort wird das Kalziumsulfat mit den erforderlichen Zusatzstoffen für die geforderte Zementklinkerqualität im richtigen Verhältnis vermischt. Mit dem vorbereiteten Zementklinkerrohmehl wird die Zementklinker-Prozesseinheit 8 beschickt, wobei das Rohmehl vor der Zuführung zur Prozesseinheit 8 vorzugsweise in einem Wärmetauscher vorgewärmt wird (nicht gezeigt). In der Zementklinker-Prozesseinheit 8 wird Schwefeldioxid aus dem Kalziumsulfat getrennt und als Abgas aus der Zementklinker-Prozesseinheit der Schwefeldioxid-Abgasbehandlung 9 zugeführt. Das behandelte Schwefeldioxid-Gas kann optional der existierenden Schwefelsäureproduktionsanlage 4 zugeführt werden. Alternativ kann das behandelte Schwefeldioxid-Gas optional einer neuen Schwefelsäureproduktionsanlage (vgl. 13 in Fig. 2) zugeführt werden. Das in der Zementklinkerprozess-Einheit verbleibende Kalzium reagiert mit den Zusatzstoffen zu Zementklinker, z.B. die Brenntemperatur zur Zementklinkerherstellung kann z.B. bei einer Temperatur im Bereich von 1200°C bis 1600 °C und einer Brenndauer von 5 Minuten bis 60 Minuten liegen. Der so produzierte Zementklinker wird gekühlt und kann weiter zu Zement verarbeitet werden.

Fig. 2 zeigt ein schematisches Fließbild zur Verwertung von Kalziumsulfat aus der Phosphorsäureproduktion mithilfe eines integrierten Komplexes zur Herstellung von Zementklinker und Schwefelsäure gemäß Fig. 1, wobei zusätzlich alternative oder zusätzliche Prozessschritte gezeigt sind. Im Folgenden wird auf die alternativen oder zusätzlichen Prozessschritte eingegangen, ansonsten wird auf die Erläuterungen zu Fig. 1 verwiesen. Fig. 2 zeigt eine alternative Quelle für das in Schritt a) eingesetzte Kalziumsulfat. Anstelle des Kalziumsulfats aus der Filtrationseinheit der Phosphorsäureanlage 3 kann für das in Schritt a) eingesetzte Kalziumsulfat ein Kalziumsulfat von einer Halde 10 eingesetzt werden, bei dem es sich um deponiertes Kalziumsulfat aus einer Phosphorsäureproduktion handelt. Des Weiteren ist in Fig. 2 der optionale Aufbereitungsschritt zur Entfernung von Seltenen Erden gezeigt, der eine Reaktionseinheit zur Gewinnung Seltener Erdmetalle aus dem Kalziumsulfat 11 und die Kalziumsulfat-Trenneinheit 12 zur Abtrennung der flüssigen Phase von dem gereinigten Kalziumsulfat umfasst. Ferner ist in Fig. 2. gezeigt, dass das aus der SO₂-Behandlung 9 erhaltene Schwefeldioxid für die Gewinnung von Schwefelsäure in der existierenden Schwefelsäureproduktionsanlage 4 und/oder einer neuen Schwefelsäureproduktionsanlage 13 eingesetzt werden kann.

### Beispiele

Nachfolgend sind einige Beispiele zur Reinigung verschiedener Phosphorgipse dargestellt. Die Phosphorgipse wurden jeweils vor und nach der Behandlung nach beschriebenen Verfahren für mindestens 24 h bei 50 °C getrocknet um freies Wasser zu entfernen. Die chemische Zusammensetzung der Gipse wurde vor und nach Behandlung mittels Röntgenfluoreszenzanalyse (RFA) auf einem Axios Advanced Spektrometer der Firma PANalytical mit dem Software Packet SuperQ 5.3B bestimmt. Zu diesem Zweck wurde der Gips mittels Lithiumtetraborat aufgeschlossen. Der Glühverlust der Gipse wurde bei 1050 °C ermittelt. Der Fluorid-Gehalt wurde nach Aufschluss des Gipses mittels Natriumperoxid und Salzsäure mittels ionenselektiver Elektrode bestimmt. Alle nachfolgend angegebenen Werte der Ergebnisse aus der RFA beziehen sich auf die glühverlustfreien Gipsproben. Einige Gipse wurden zusätzlich noch vor und nach Behandlung mittels Pulverdiffraktometrie auf einem D4 Endeavor Diffraktometer der Firma Bruker hinsichtlich ihrer mineralogischen Zusammensetzung überprüft. Zur Auswertung mittels Rietveld Methode wurde das Software Packet Topas 4.2 der Firma Bruker verwendet. Der D_{V}(50)-Wert der Korngrößenverteilung wurde auf einem Mastersizer 3000 der Firma Malvern mit Ethanol als Dispergiermedium ermittelt. Als Streuungsmodell wurde das Fraunhofer-Modell angewandt.

### Beispiel 1:

50 g eines Phosphorgips bezeichnet als "PG A" mit P₂O₅-Gehalten von 1,29 Gew.-% und F-Gehalten von 1,25 Gew.-% wurde mit 200 ml (S/L = 0,25) 8 molarer Schwefelsäure für 30 Minuten bei 60 °C mittels eines KPG-Rührers gerührt. Nach Ablauf der Zeit wurde die Suspension zügig filtriert und zweimal mit 57,5 ml Wasser bei Raumtemperatur gewaschen. Nach Behandlung betragen die P₂O₅-bzw. F-Gehalte noch 0,02 bzw. 0,01 Gew.-% **(entspricht einer Auslaugungseffizienz von 98 % bzw. 99 %)**. Die mineralogische Zusammensetzung vor Behandlung wurde mit 2,8 Gew.-% Quarz, 91,5 Gew.-% Dihydrat (CaSO₄ * 2H₂O), 3,7 Gew.-% Hemihydrat (CaSO₄ * 0,5 H₂O) und 2,9 Gew.-% Anhydrit (CaSO₄) ermittelt. Nach Behandlung wurde folgende Zusammensetzung ermittelt: 3,3 Gew.-% Quarz, 1,2 Gew.-% Dihydrat (CaSO₄ * 2H₂O), 0,1 Gew.-% Hemihydrat (CaSO₄ * 0,5 H₂O) und 95,5 Gew.-% Anhydrit (CaSO₄).

### Beispiel 2:

75 g des gleichen Gipses PG A wie in Beispiel 1 wurde in einem weiteren Versuch mit 150 ml (S/L = 0,5) 6 molarer Schwefelsäure für 30 Minuten bei 60 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,29 bzw. 0,03 Gew.-% **(entspricht einer Auslaugungseffizienz von 78 % bzw. 98 %).** Nach Behandlung wurde folgende mineralogische Zusammensetzung ermittelt: 3,2 Gew.-% Quarz, 73,2 Gew.-% Dihydrat (CaSO₄ * 2H₂O), 2,4 Gew.-% Hemihydrat (CaSO₄ * 0,5 H₂O) und 21,2 Gew.-% Anhydrit (CaSO₄). Der Dᵥ(50)-Wert nach Behandlung beträgt 59,1 µm.

### Beispiel 3:

75 g eines weiteren Gipses (als PG B bezeichnet) mit P₂O₅-Gehalten von 1,70 Gew.-% und F-Gehalten von 2,13 Gew.-% wurde in einem weiteren Versuch mit 150 ml (S/L = 0,5) 6 molarer Schwefelsäure für 30 Minuten bei 75 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,07 bzw. 0,12 Gew.-% **(entspricht einer Auslaugungseffizienz von 96 % bzw. 94 %).** Die mineralogische Zusammensetzung vor Behandlung wurde mit 3 Gew.-% Quarz und 97 Gew.-% Dihydrat (CaSO₄ * 2H₂O) ermittelt. Nach Behandlung wurde folgende Zusammensetzung ermittelt: 2,5 Gew.-% Quarz, 0,4 Gew.-% Dihydrat (CaSO₄ * 2H₂O) und 97,2 Gew.-% Anhydrit (CaSO₄). Der Dᵥ(50)-Wert nach Behandlung beträgt 9,77 µm.

### Beispiel 4:

75 g des gleichen Gipses (PG B) wurde in einem weiteren Versuch mit 150 ml (S/L = 0,5) 6 molarer Schwefelsäure für 45 Minuten bei 75 °C mittels eines KPG-Rührers gerührt. Nach Ablauf der Zeit wurde die Suspension zügig filtriert und zweimal mit 86,3 ml 75 °C heißem Wasser gewaschen. Nach Behandlung betragen die P₂O₅- bzw. F-Gehalte noch 0,03 bzw. 0,11 Gew.-% **(entspricht einer Auslaugungseffizienz von 98 % bzw. 95 %).** Nach Behandlung wurde folgende mineralogische Zusammensetzung ermittelt: 2,9 Gew.-% Quarz, 0,2 Gew.-% Dihydrat (CaSO₄ * 2H₂O) und 97,0 Gew.-% Anhydrit (CaSO₄). Der Dᵥ(50)-Wert nach Behandlung beträgt 9,34 µm.

### Beispiel 5

75 g des gleichen Gipses (PG B) wurde in einem weiteren Versuch mit 150 ml (S/L = 0,5) 7 molarer Schwefelsäure für 30 Minuten bei 75 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die PzOs- bzw. F-Gehalte noch 0,03 bzw. 0,06 Gew.-% **(entspricht einer Auslaugungseffizienz von 98 % bzw. 97 %)**. Der Dᵥ(50)-Wert nach Behandlung beträgt 6,99 µm.

### Beispiel 6:

75 g des gleichen Gipses (PG B) wurde in einem weiteren Versuch mit 150 ml (S/L = 0,5) 4 molarer Schwefelsäure für 20 Minuten bei 30 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,43 bzw. 0,17 Gew.-% **(entspricht einer Auslaugungseffizienz von 75 % bzw. 92 %)**. Nach Behandlung wurde folgende mineralogische Zusammensetzung ermittelt: 1,7 Gew.-% Quarz, 96,3 Gew.-% Dihydrat (CaSO₄ * 2H₂O), 2,0 Gew.-% Hemihydrat (CaSO₄ * 0,5 H₂O) und 0 Gew.-% Anhydrit (CaSO₄). Der Dᵥ(50)-Wert nach Behandlung beträgt 16,1 µm.

### Beispiel 7:

Zur Beurteilung, ob das beschriebene Verfahren auch mit lediglich getrenntem und damit ungewaschenem Phosphorgips aus der Phosphorsäureanlage eingesetzt werden kann, wurden 75 g des gleichen Gipses PG B wie in Beispiel 3 mit 25 g 25 %iger P₂O₅-Lösung (in Form von Phosphorsäure) versetzt und mit 150 ml (S/L = 0,5; 25 g PzOs-Lösung nicht berücksichtigt) 7 molarer Schwefelsäure für 30 Minuten bei 75 °C mittels eines KPG-Rührers gerührt. Nach Ablauf der Zeit wurde die Suspension zügig filtriert und zweimal mit 86,3 ml Wasser bei Raumtemperatur gewaschen. Nach Behandlung betragen die P₂O₅- bzw. F-Gehalte noch 0,07 bzw. 0,08 Gew.-% **(entspricht einer Auslaugungseffizienz von 96 % bzw. 96 %)**. Nach Behandlung wurde folgende mineralogische Zusammensetzung ermittelt: 2,5 Gew.-% Quarz, 0,2 Gew.-% Dihydrat (CaSO₄ * 2H₂O) und 97,3 Gew.-% Anhydrit (CaSO₄). Der Dᵥ(50)-Wert nach Behandlung beträgt 6,62 µm.

### Beispiel 8:

Zur Bewertung der Filtrierbarkeit der Suspensionen in Abhängigkeit der Einflussgrößen wie bspw. Temperatur, Verweilzeit und Konzentration der Säure wurden die Filtrationszeiten der Suspensionen aus den Beispielen 3, 4 und 5 über eine Filternutsche mit einer Filterfläche von 56 cm² bei einem Vakuum von 500 mbar bestimmt. In allen Fällen lag die Filterkuchenhöhe zwischen 13 und 14,5 mm. Bei der Suspension aus Beispiel 5 ergaben sich eine Filtrationszeit von 30 s und 52 s sowie 39 s in 1. bzw. 2. Waschung. Bei der Suspension aus Beispiel 3 ergaben sich eine Filtrationszeit von 11 s und 22 s sowie 19 s in 1. bzw. 2. Waschung. Bei der Suspension aus Beispiel 4 ergaben sich eine Filtrationszeit von 11 s und 20 s sowie 11 s in 1. bzw. 2. Waschung. Es zeigt sich, dass durch Anpassung der Einflussgrößen die Filtrierbarkeit unter Beibehaltung der Reinigungsgüte optimiert werden kann.

### Beispiel 9:

Zur Überprüfung der Machbarkeit einer Prozessanalytik mittels Bestimmung der Säurekonzentration zu integrieren wurden 150 g des Gipses PG B in einem weiteren Versuch mit 300 ml (S/L = 0,5) 5 molarer Schwefelsäure bei 75 °C mittels eines KPG-Rührers gerührt. Nach definierten Zeitintervallen von jeweils 10 Minuten und direkt nach Beginn (t = 1 Minute) wurden jeweils eine Probe (ca. 12 ml Suspension) gezogen filtriert und zwei Mal mit je ca. 6 ml Wasser gewaschen. Das Filtrat des ersten Filtrationsschritts wurde aufgefangen und für weitere Analysen verwendet. Die Reaktion wurde nach 100 Minuten abgebrochen, so dass insgesamt 11 Proben gezogen wurden. Zur Bestimmung der Säurekonzentration der einzelnen Filtratproben wurden jeweils 0,5 ml des Filtrats mit ca. 20 - 40 ml Reinstwasser verdünnt und mittels einer 1 M Natronlauge titriert. Zusätzlich wurde noch die Säurekonzentration der eingesetzten Säure überprüft. Der Äquivalenzpunkt wurde mittels eines handelsüblichen automatischen Titrator der Firma Metrohm potentiometrisch bestimmt. Die filtrierten und gewaschenen Phosphorgips-Proben wurden für mind. 24 h bei 50 °C getrocknet und anschließend hinsichtlich Mineralogie und P₂O₅-Gehalt untersucht.

**Tabelle 1. Resultierende Säurekonzentration nach entsprechender Verweilzeit des Gipses PG B in Schwefelsäure; mit den Reaktionsbedingungen: c = 5 mol/l; T = 75 °C; S/L = 0,5. Die Konzentration der eingesetzten Säure wurde ebenfalls überprüft.**

| **Probe** | **Zeit Probenahme min.** | **Säure-Konzentration Probe mol/l** | **Relative Säuredifferenz ⁱ⁾** % |
|---|---|---|---|
| | | Mittelwert | |
| 5 M H₂SO₄ (eingesetzt) | | 4,97 | |
| V0 | 1 | 5,01 | 0% |
| V1 | 10,33 | 4,92 | 21% |
| V2 | 20 | 4,82 | 44% |
| V3 | 30 | 4,77 | 56% |
| V4 | 40 | 4,67 | 78% |
| V5 | 50 | 4,57 | 100% |
| V6 | 60 | 4,60 | 94% |
| V7 | 70 | 4,61 | 90% |
| V8 | 80 | 4,64 | 85% |
| V9 | 90 | 4,67 | 78% |
| V10 | 100 | 4,68 | 76% |

| | | | |
|---|---|---|---|
| i) Berechnet nach ΔCₜ₍ᵢ₎ = 1-((Cₜ₍ᵢ₎-C_{t(MIN)})/(Cₜ₍₀₎-C_{t(MIN)})); t_{(MIN)} in diesem Beispiel nach 50 Minuten; t₍₀₎ in diesem Beispiel Probenahme nach einer Minute definiert | | | |

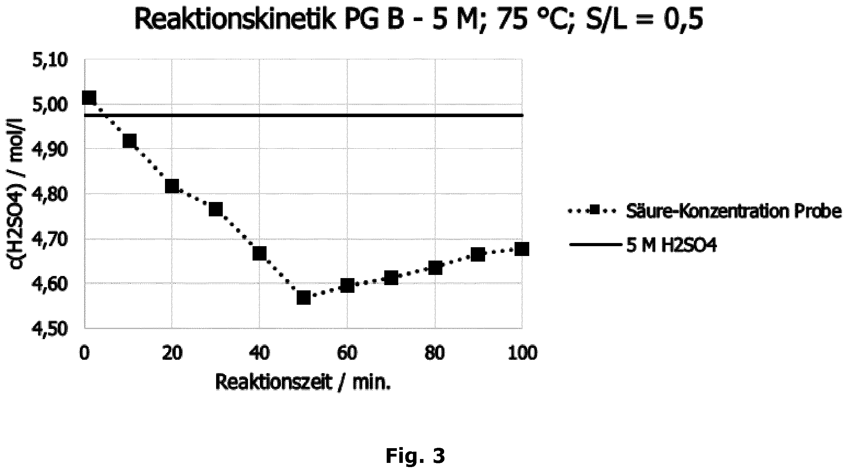

Figur 3 zeigt eine grafische Darstellung der Säurekonzentration über die Verweilzeit des Gipses des Gipses PG B in Schwefelsäure

**Tabelle 2. Mineralogie und Auslaugungseffizienz hinsichtlich P₂O₅-Gehalt nach entsprechender Verweilzeit des Gipses PG B in Schwefelsäure; mit den Reaktionsbedingungen: c = 5 mol/l; T = 75 °C; S/L = 0,5.**

| **Probe** | **Probenahme min.** | **Anhydrit Gew.-%** | **Dihydrat Gew.-%** | **Hemihydrat Gew.-%** | **P₂O₅ (GV-frei) Gew.-%** | **P₂O₅- Auslaugung %** |
|---|---|---|---|---|---|---|
| V0 | 1 | 18,7 | 74,9 | 4,4 | 0,46 | 72,8 |
| V1 | 10,33 | 34,0 | 59,4 | 3,4 | 0,42 | 75,2 |
| V2 | 20 | 35,4 | 58,6 | 3,4 | 0,33 | 80,6 |
| V3 | 30 | 40,1 | 54,6 | 2,6 | 0,27 | 84,4 |
| V4 | 40 | 79,4 | 17,3 | 0,7 | 0,18 | 89,7 |
| V5 | 50 | 96,9 | 0,2 | 0,0 | 0,11 | 93,7 |
| V6 | 60 | 97,2 | 0,0 | 0,0 | 0,06 | 96,2 |
| V7 | 70 | 97,3 | 0,0 | 0,0 | 0,05 | 96,8 |
| V8 | 80 | 95,1 | 0,7 | 0,0 | 0,04 | 97,5 |
| V9 | 90 | 96,4 | 0,3 | 0,0 | 0,05 | 96,8 |
| V10 | 100 | 97,3 | 0,0 | 0,0 | 0,03 | 98,1 |

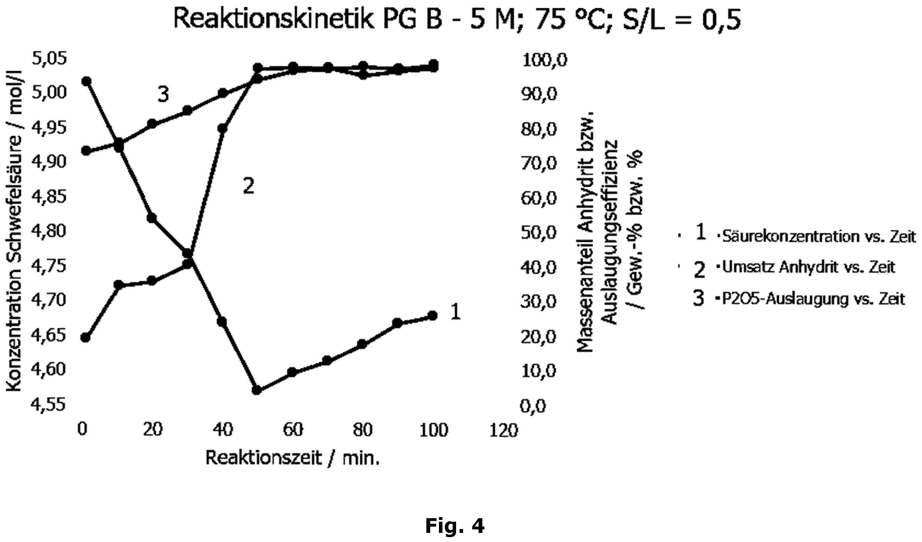

Figur 4 zeigt eine grafische Darstellung der Säurekonzentration (linke Achse), des Anhydrit-Gehalts (rechte Achse) und der Auslaugungseffizienz hinsichtlich P₂O₅-Gehalt (rechte Achse) über die Verweilzeit des Gipses PG B in Schwefelsäure.

### Beispiel 10:

Zum selben Zweck wie bei Beispiel 9 wurde 150 g des Gipses PG A in einem weiteren Versuch mit 300 ml (S/L = 0,5) 6 molarer Schwefelsäure bei 75 °C mittels eines KPG-Rührers gerührt. Nach definierten Zeitintervallen von jeweils ca. 6 Minuten und direkt nach Beginn (t = 0,5 Minuten) wurden jeweils eine Probe (ca. 12 ml Suspension) gezogen filtriert und zwei Mal mit je ca. 6 ml Wasser gewaschen. Das Filtrat des ersten Filtrationsschritts wurde aufgefangen und für weitere Analysen verwendet. Die Reaktion wurde nach 55 Minuten abgebrochen, so dass insgesamt 9 Proben gezogen wurden. Zur Bestimmung der Säurekonzentration der einzelnen Filtratproben wurden jeweils 0,5 ml des Filtrats mit ca. 20 - 40 ml Reinstwasser verdünnt und mittels einer 1 M Natronlauge titriert. Zusätzlich wurde noch die Säurekonzentration der eingesetzten Säure überprüft. Der Äquivalenzpunkt wurde mittels eines handelsüblichen automatischen Titrator der Firma Metrohm potentiometrisch bestimmt. Die filtrierten und gewaschenen Phosphorgips-Proben wurden für mind. 24 h bei 50 °C getrocknet und anschließend hinsichtlich Mineralogie und P₂O₅-Gehalt untersucht.

**Tabelle 3. Resultierende Säurekonzentration nach entsprechender Verweilzeit des Gipses PG A in Schwefelsäure; mit den Reaktionsbedingungen: c = 6 mol/l; T = 75 °C; S/L = 0,5. Die Konzentration der eingesetzten Säure wurde ebenfalls überprüft.**

| **Probe** | **Probenahme min.** | **Säure-Konzentration Probe mol/l** | **Relative Säuredifferenz ⁱ⁾ %** |
|---|---|---|---|
| | | Mittelwert | |
| 6 M H₂SO₄ (eingesetzt) | | 6,076 | |
| V0 | 0,5 | 6,102 | 0% |
| V1 | 6 | 5,946 | 31% |
| V2 | 12 | 5,662 | 88% |
| V3 | 17,5 | 5,599 | 100% |
| V4 | 23 | 5,622 | 95% |
| V5 | 28,5 | 5,630 | 94% |
| V6 | 34,5 | 5,665 | 87% |
| V7 | 45 | 5,656 | 89% |
| V8 | 55 | 5,699 | 80% |

| | | | |
|---|---|---|---|
| i) Berechnet nach ΔCₜ₍ᵢ₎ = 1-((Cₜ₍ᵢ₎-_{Ct(MIN)})/(Cₜ₍₀₎-C_{t(MIN)})); t_{(MIN)} in diesem Beispiel nach 17,5 Minuten; t₍₀₎ in diesem Beispiel Probenahme nach einer halben Minute definiert | | | |

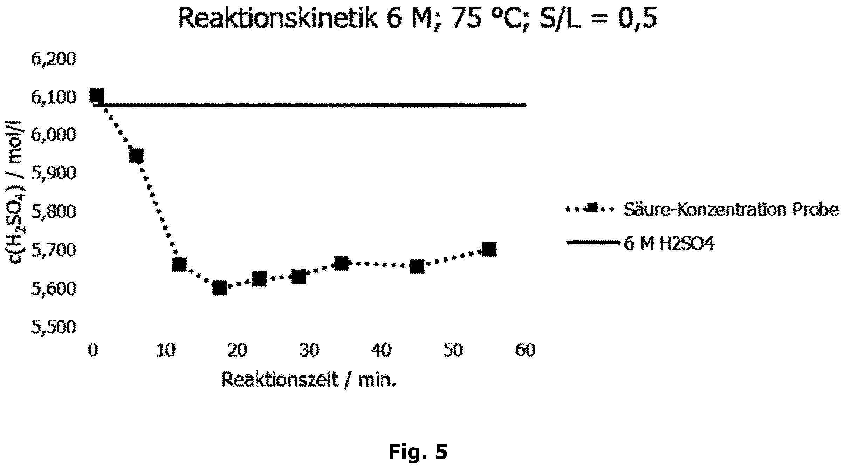

Figur 5 zeigt eine grafische Darstellung der Säurekonzentration über die Verweilzeit des Gipses PG A in Schwefelsäure.

**Tabelle 4. Mineralogie und Auslaugungseffizienz hinsichtlich PzOs-Gehalt nach entsprechender Verweilzeit des Gipses PG A in Schwefelsäure; mit den Reaktionsbedingungen: c = 6 mol/l; T = 75 °C; S/L = 0,5.**

| **Probe** | **Probenahme min.** | **Anhydrit Gew.-%** | **Dihydrat Gew.-%** | **Hemihydrat Gew.-%** | **P₂O₅ (GV-frei) Gew.-%** | **P₂O₅**-**Auslaugung %** |
|---|---|---|---|---|---|---|
| V0 | 0,5 | 17,9 | 79,9 | 0,0 | 0,55 | 44,9 |
| V1 | 6,0 | 89,4 | 7,9 | 0,0 | 0,32 | 67,8 |
| V2 | 12,0 | 95,1 | 2,1 | 0,0 | 0,11 | 88,9 |
| V3 | 17,5 | 97,6 | 0,0 | 0,0 | 0,05 | 94,5 |
| V4 | 23,0 | 97,7 | 0,0 | 0,0 | 0,06 | 94,4 |
| V5 | 28,5 | 97,5 | 0,0 | 0,0 | 0,04 | 95,6 |
| V6 | 34,5 | 97,6 | 0,0 | 0,0 | 0,04 | 95,6 |
| V7 | 45,0 | 97,4 | 0,0 | 0,0 | 0,04 | 95,6 |
| V8 | 55,0 | 97,7 | 0,0 | 0,0 | 0,04 | 95,6 |

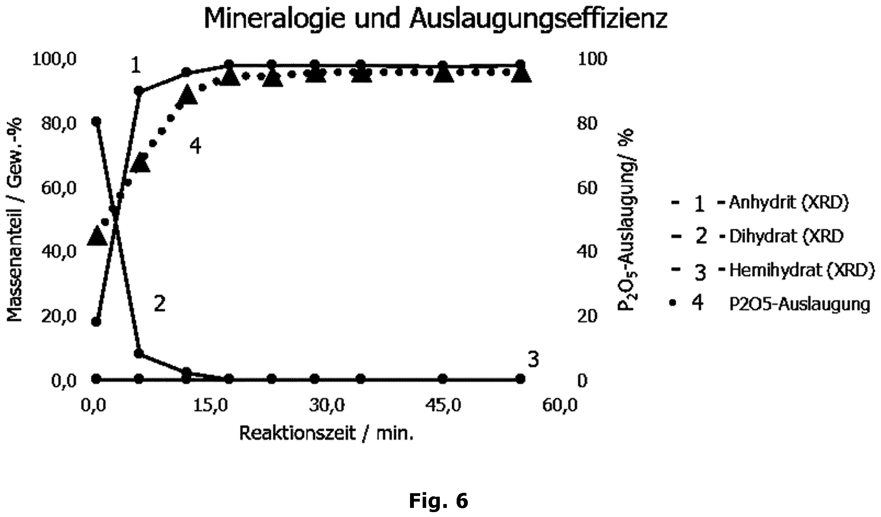

Figur 6 zeigt eine grafische Darstellung der Zusammensetzung der Mineralogie (linke Achse) und der Auslaugungseffizienz hinsichtlich PzOs-Gehalt (rechte Achse) über die Verweilzeit des Gipses PG A in Schwefelsäure.

### Beispiel 11:

Aufgrund einer Anlagenoptimierung hinsichtlich z.B. der Invest- und Betriebskosten kann es vorteilhaft sein die Verweilzeiten im Prozess nun derart zu optimieren, dass die Reinigungseffizienz des Verfahrens an eine erforderliche Zementklinkerqualität und nicht maximale Reinigungseffizienz hinsichtlich P₂O₅-Gehalts angepasst wird. Als Qualität des Phosphorgips sei in diesem Beispiel ein Rest P₂O₅-Gehalt von maximal 0,25 Gew.-% gefordert. Die Beispiele 9 und 10 nutzend, kann für beide Phosphorgipse, welche unter unterschiedlichen Reaktionsparametern behandelt wurden, anhand der Bestimmung der relativen Säuredifferenz der Rest P₂O₅-Gehalt berechnet und damit die Verweilzeit eingestellt werden. Als "Gipskonstante" wird zunächst der Restgehalt an P₂O₅ im Phosphorgips nach maximal einer Minute bestimmt (0,46 bzw. 0,55 Gew.-% für Beispiel 9 bzw. 10). Der Restgehalt an P₂O₅ nach maximaler Auslaugungszeit (t_{(MAX)}; dies stellt den maximal erreichbaren Auslaugungsgrad dar) wird nach Reaktionsende, wobei die Verweilzeit deutlich größer als die Verweilzeit zum Erreichen des Minimums der Säurekonzentration liegen sollte, bestimmt (0,03 bzw. 0,04 Gew.-% für Beispiel 9 bzw. 10). Die relative Säuredifferenz wird wie im Text zuvor beschrieben über ΔCₜ₍ᵢ₎ = 1-((Cₜ₍ᵢ₎-C_{t(MIN)})/(Cₜ₍₀₎-C_{t(MIN)})) bestimmt. Zur Bestimmung des zu erwartenden Rest P₂O₅-Gehalts zum Zeitpunkt t₍ᵢ₎ ist es nun sinnvoll eine lineare Regressionsgerade für die relative Säuredifferenz vom Zeitpunkt t₍₀₎ bis t_{(MIN)} zu berechnen. Anhand dessen kann nun Steigung und Achsenabschnitt der relativen Säuredifferenz in entsprechende Steigung und Achsenabschnitt an P₂O₅-Gehalte umgerechnet werden (mit Steigung m(Gew.-% P₂O₅) = m(% rel. Säuredifferenz)*(P₂O₅-Gehaltₜ₍₀₎-P₂O₅-Gehalt_{t(MAX)}) und Achsenabschnitt c(Gew.-% P₂O₅) = c(% rel. Säuredifferenz)*(P₂O₅-Gehaltₜ₍₀₎-P₂O₅-Gehalt_{t(MAX)}). Offensichtlich ist die Vorhersagbarkeit des zu erwartenden P₂O₅-Gehalts nur bis zur minimalen Säurekonzentration möglich. Für Beispiel 9 wäre somit bei einer relativen Säuredifferenz von 49 % ein Rest P₂O₅-Gehalt von 0,25 Gew.-% zu erwarten (nach Tabelle Beispiel 9 nach ca. 25 Minuten erreicht; P₂O₅-Gehalt (gemessen) ca. 0,30 Gew.-%), was nach linearer Regression einer Verweilzeit von 30,2 Minuten entspräche (rel. Säuredifferenz (gemessen) ca. 56 %; P₂O₅-Gehalt (gemessen) ca. 0,27 Gew.-%).

Für Beispiel 10 wäre somit bei einer relativen Säuredifferenz von 59 % ein Rest P₂O₅-Gehalt von 0,25 Gew.-% zu erwarten (nach Tabelle Beispiel 10 nach ca. 9 Minuten erreicht; P₂O₅-Gehalt (gemessen) ca. 0,20 Gew.-%), was nach linearer Regression einer Verweilzeit von 8,2 Minuten entspräche (rel. Säuredifferenz (gemessen) ca. 57 %; P₂O₅-Gehalt (gemessen) ca. 0,22 Gew.-%).

### Bezugszeichenliste

- 1: Aufbereitungseinheit Phosphatgestein bzw. Phosphaterz
- 2: Reaktionseinheit der Phosphorsäureanlage
- 3: Filtrationseinheit der Phosphorsäureanlage
- 4: Schwefelsäureproduktionsanlage (existierend)
- 5: Kalziumsulfat-Reaktionseinheit
- 6: Kalziumsulfat-Trenneinheit
- 7: Rohmehl-Zubereitungseinheit
- 8: Zementklinker-Prozesseinheit
- 9: Schwefeldioxid-Abgasbehandlung
- 10: Kalziumsulfat von Halde (aus Phosphorsäureproduktion)
- 11: Gewinnung Seltene Erden aus Kalziumsulfat
- 12: Kalziumsulfat-Trenneinheit
- 13: Schwefelsäureproduktionsanlage (neu)

## Patentansprüche

1. Verfahren zur Herstellung von Schwefelsäure und Zementklinker unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und abgetrennt wird, wobei das Verfahren folgende Schritte umfasst:
a) das von der Phosphorsäure abgetrennte Kalziumsulfat wird mit einer Säure behandelt, um eine Suspension mit gereinigtem Kalziumsulfat zu erhalten,
b) das gereinigte Kalziumsulfat wird als Feststoff von der flüssigen Phase der erhaltenen Suspension abgetrennt,
c) das abgetrennte gereinigte Kalziumsulfat wird mit Zusatzstoffen und Reduktionsmittel vermischt, um eine Rohmehlmischung für die Zementklinkerproduktion zu erhalten, wobei in der Rohmehlmischung die Kalziumkomponente für den Zementklinker vorzugsweise vollständig von dem abgetrennten gereinigten Kalziumsulfat gebildet wird,
d) die Rohmehlmischung wird gebrannt, um den Zementklinker zu erhalten, wobei Schwefeldioxid als Abgas gebildet wird, und
e) das gebildete Schwefeldioxid wird als Rohstoff einer Schwefelsäureproduktion zugeführt, um die Schwefelsäure herzustellen, wobei die hergestellte Schwefelsäure als Einsatzmaterial in der Phosphorsäureproduktion verwendet und/oder einer anderen Nutzung zugeführt werden kann,
**dadurch gekennzeichnet, dass** das in Schritt b) erhaltene gereinigte Kalziumsulfat mit Zusatzstoffen und Reduktionsmittel bei einem Flüssigkeitsanteil von 9 Gew.-% - 22 Gew.-% einer formgebenden Einrichtung zugeführt wird, bevor die geformte Rohmehlmischung der Vorwärmeinrichtung und/oder Kalzinator und/oder Ofen zugeführt wird.

2. Verfahren nach Anspruch 1, wobei die Abtrennung des Kalziumsulfates aus der Suspension in Schritt b) zu einen Zeitpunkt t₍ᵢ₎ (mit t₍ᵢ₎ < t_{(MIN)}) eingeleitet wird, an dem die Differenz der Säurekonzentration zwischen resultierender Säurekonzentration Cₜ₍₀₎ nach Zugabe der Säure zum zu reinigenden Phosphorgips (Verweilzeit t₀ = 0 min.) und Säurekonzentration Cₜ₍ᵢ₎ an besagten Reaktionsende (t₍ᵢ₎) mindestens 25 % (ΔCₜ₍ᵢ₎ = 1-((Cₜ₍ᵢ₎-Cₜ₍₀₎)/(C_{t(Min)}-Cₜ₍₀₎)) ≥ 25 %) der Differenz zwischen resultierender Säurekonzentration Cₜ₍₀₎ nach Zugabe der Säure zum zu reinigenden Phosphorgips (Verweilzeit t₀ = 0 min.) und erzielbares Minimum der Säurekonzentration C_{t(MIN)} bei gegebenen Reaktionsbedingungen beträgt, wobei t_{(MIN)} = Zeitpunkt des erzielbaren Minimums der Säurekonzentration ist.

3. Verfahren nach Anspruch 2, **dadurch gekennzeichnet, dass** die Säurekonzentration entweder aktiv gemessen wird oder durch einen oder mehrere erfasste Prozessparameter direkt oder indirekt berechnet wird.

4. Verfahren nach einem der vorhergehenden Ansprüche, **dadurch gekennzeichnet, dass** das Verfahren ein integriertes Verfahren ist.

5. Verfahren nach einem der vorhergehenden Ansprüche, **dadurch gekennzeichnet, dass** das für Schritt c) verwendete gereinigte Kalziumsulfat einen P₂O₅-Gehalt von weniger als 1 Gew.-%, bevorzugt weniger als 0,5 Gew.-%, bevorzugter weniger als 0,1 Gew.-%, und einen Fluoridgehalt von weniger als 1 Gew.-%, bevorzugt weniger als 0,5 Gew.-%, bevorzugter weniger als 0,1 Gew.-%, aufweist.

6. Verfahren nach einem der vorhergehenden Ansprüche, **dadurch gekennzeichnet, dass** das für Schritt c) verwendete abgetrennte gereinigte Kalziumsulfat von Schritt b) mehr als 70 Gew.-%, bevorzugt mehr als 80 Gew.-%, bevorzugter mehr als 90 Gew.-%, in der Rohmehlmischung ausmacht.

7. Verfahren nach einem der vorhergehenden Ansprüche, **dadurch gekennzeichnet, dass** die Rohmehlmischung mit Prozessluft mit einem Sauerstoffanteil von mehr als 21 Vol.-%, bevorzugt mehr als 30 Vol.-%, bevorzugter mehr als 50 Vol. %, und bis zu 100 Vol.-%, gebrannt wird.

8. Verfahren nach einem der vorhergehenden Ansprüche, **dadurch gekennzeichnet, dass** als Kalziumsulfat, das in Schritt a) eingesetzt wird, das aus einer Trenneinheit der Phosphorsäureproduktion erhaltene Kalziumsulfat verwendet wird, wobei bevorzugt der nach der ersten Trennung von der Phosphorsäure erhaltene Kalziumsulfat-Feststoff, bevorzugt Kalziumsulfat-Filterkuchen, aus der Phosphorsäureproduktion direkt oder nach einer oder mehreren Wäschen mit Flüssigkeit, bevorzugt Wasser, verwendet wird, und/oder
auf Halden gelagertes Kalziumsulfat aus der Phosphorsäureproduktion verwendet wird.

9. Verfahren nach einem der vorhergehenden Ansprüche, **dadurch gekennzeichnet, dass** das von der Phosphorsäure abgetrennte Kalziumsulfat, das in Schritt a) eingesetzt wird, Kalziumsulfat in Form von Dihydrat, Hemihydrat oder einer Kombination davon ist.

10. Verfahren nach einem der vorhergehenden Ansprüche, **dadurch gekennzeichnet, dass**
in Schritt a) die Säure in einer solchen Menge zugegeben wird, dass das Gewichtsverhältnis von Feststoff zu Flüssigkeit (S/L-Verhältnis) in der Suspension im Bereich von 1/10 bis 1/1, bevorzugt 1/5 bis 1/1, liegt, und/oder
die aus der Behandlung nach Schritt a) resultierende Säure eine 1 bis 12 molare, bevorzugt 3 bis 10 molare, bevorzugter 5 bis 8 molare, Säure ist, und/oder
wobei die Säure ausgewählt ist aus Salzsäure, Salpetersäure, schweflige Säure und/oder Schwefelsäure, und/oder
wobei die Behandlung in Schritt a) bei einer Temperatur im Bereich von 15 bis 100 °C, bevorzugt 30 bis 80 °C, bevorzugter 45 bis 75 °C, durchgeführt wird, und/oder
wobei die Dauer der Behandlung in Schritt a) im Bereich von 5 bis 120 Minuten, bevorzugt 15 bis 90 Minuten, bevorzugter 20 bis 60 Minuten, liegt.

11. Verfahren nach einem der vorhergehenden Ansprüche, **dadurch gekennzeichnet, dass** das in Schritt b) erhaltene abgetrennte gereinigte Kalziumsulfat mindestens 5 Gew.-%, bevorzugt mindestens 30 Gew.-%, bevorzugter mindestens 50 Gew.-% Anhydrit, bezogen auf trockenes Kalziumsulfat, enthält.

12. Verfahren nach einem der vorhergehenden Ansprüche, **dadurch gekennzeichnet, dass** die Zusatzstoffe zur Herstellung der Rohmehlmischung in Schritt c) Rohstoffe oder Verbindungen sind, die Elemente wie Si, Al, Fe und gegebenenfalls andere Elemente beinhalten,
und/oder als Reduktionsmittel Kohlenstoff und/oder Kohlenwasserstoffe und/oder elementarer Schwefel zugemischt wird, und/oder
Additive und/oder Mineralisatoren zur beschleunigten Zersetzung des gereinigten Kalziumsulfates und/oder zur verbesserten Bildung von Klinkermineralien zugesetzt werden und/oder
der in Schritt d) erzeugte Zementklinker zur Zementherstellung verwendet wird.

13. Verfahren nach einem der vorhergehenden Ansprüche, **dadurch gekennzeichnet, dass** das in Schritt b) erhaltene gereinigte Kalziumsulfat vor der Zuführung zu Schritt c) auf einen Wassergehalt unter 22 Gew.-%, bevorzugt 12 - 14 Gew.-% und bevorzugter unter 5 Gew.-%, noch mehr bevorzugt unter 1 Gew.-% getrocknet wird.

14. Verfahren nach einem der vorherigen Ansprüche, **dadurch gekennzeichnet, dass** das in Schritt b) erhaltene gereinigte Kalziumsulfat mit Zusatzstoffen und Reduktionsmittel bei einem Flüssigkeitsanteil von 12 Gew.-% - 14 Gew.% einer formgebenden Einrichtung, wie beispielsweise einer Presse und/oder einem Teller und/oder einem Rührwerksmischer und/oder einem mechanischen Wirbelbettreaktor zugeführt wird, bevor die geformte Rohmehlmischung der Vorwärmeinrichtung und/oder Kalzinator und/oder Ofen zugeführt wird.

15. Verfahren nach einem der vorhergehenden Ansprüche, **dadurch gekennzeichnet, dass** das gereinigte Kalziumsulfat vor der Zuführung zu Schritt c) im Vergleich zu dem in Schritt a) eingesetzten Kalziumsulfat einen reduzierten Gehalt an radioaktiven Elementen und/oder unerwünschten Elementen und/oder Seltenen Erden aufweist.

16. Verfahren nach einem der vorhergehenden Ansprüche, **dadurch gekennzeichnet, dass** der Umfang der Reinigung des Kalziumsulfats in Schritt a) unter Berücksichtigung der Verunreinigungen, die in den eingesetzten Zusatzstoffen für das Rohmehl enthalten sind, und die für den Zementklinker einzuhaltenden Richtwerte an Phosphor und Fluor, die bevorzugt maximal 1,0 Gew.-%, bevorzugter maximal 0,5 Gew.-%, noch bevorzugter maximal 0,1 Gew.-% P₂O₅ und/oder bevorzugt maximal 0,5 Gew.-%, bevorzugter maximal 0,25 Gew.-%, noch bevorzugter maximal 0,1 Gew.-% F sind, eingestellt wird, und/oder
der Flüssigkeitshaushalt, bevorzugt der Wasserhaushalt, der Phosphorsäureproduktion durch das integrierte Verfahren nicht oder nur unwesentlich geändert wird, insbesondere da der Flüssigkeitseinsatz, bevorzugt der Wassereinsatz, zur Reinigung des Kalziumsulfats im integrierten Verfahren an den Flüssigkeitshaushalt, bevorzugt den Wasserhaushalt, der Phosphorsäureproduktion gekoppelt ist.

17. Verfahren nach einem der vorhergehenden Ansprüche, **dadurch gekennzeichnet, dass**
als Brennstoffe im Verfahren teilweise oder vollständig Ersatzbrennstoffe eingesetzt werden, und/oder
das abgetrennte gereinigte Kalziumsulfat als CO₂-neutrale Kalziumkomponente für die Herstellung des Zementklinkers dient, und/oder
neben dem abgetrennten gereinigten Kalziumsulfat mindestens ein weiterer COz-neutraler Rohstoff für die Herstellung des Zementklinkers eingesetzt wird, und/oder
die für das Verfahren erforderliche Energie teilweise oder vollständig durch regenerative Energiequellen bereitgestellt wird.

18. Anlage zur Herstellung von Schwefelsäure und Zementklinker unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und abgetrennt wird, wobei die Anlage folgende Einrichtungen umfasst:
a) eine Kalziumsulfat-Reaktionseinheit, die geeignet ist, um darin das von der Phosphorsäure abgetrennte Kalziumsulfat mit einer Säure zu behandeln, um eine Suspension mit gereinigtem Kalziumsulfat zu erhalten,
b) eine Kalziumsulfat-Trenneinheit, die geeignet ist, um das gereinigte Kalziumsulfat als Feststoff von der flüssigen Phase der erhaltenen Suspension abzutrennen,
c) eine Rohmehl-Mischeinheit, die geeignet ist, um darin das abgetrennte gereinigte Kalziumsulfat mit Zusatzstoffen und Reduktionsmittel zu vermischen, um eine Rohmehlmischung für die Zementklinkerproduktion zu erhalten, wobei in der Rohmehlmischung die Kalziumkomponente für den Zementklinker vorzugsweise vollständig von dem abgetrennten gereinigten Kalziumsulfat gebildet wird,
d) eine Zementklinker-Produktionseinheit, insbesondere eine Kombination von einem Vorwärmer, wenigstens einer Brenneinrichtung und einem Kühler, die geeignet sind, die Rohmehlmischung vorzuwärmen, zu brennen und zu kühlen, um den Zementklinker zu erhalten, wobei Schwefeldioxid als Abgas gebildet wird, und
e) eine Schwefelsäure-Produktionsanlage, zu der das in der Zementklinker-Produktionseinheit gebildete und gegebenenfalls gereinigte Schwefeldioxid-Abgas als Rohstoff zugeführt wird, um Schwefelsäure herzustellen, wobei die Schwefelsäure-Produktionsanlage ein Teil der Phosphorsäureproduktionsanlage oder eine externe Schwefelsäure-Produktionsanlage sein kann,
**dadurch gekennzeichnet, dass** die Anlage eine formgebende Einrichtung aufweist, die vor der Vorwärmeinrichtung und/oder Kalzinator und/oder Ofen angeordnet ist.

19. Anlage nach Anspruch 18, **dadurch gekennzeichnet, dass** die Kalziumsulfat-Reaktionseinheit und die Kalziumsulfat-Trenneinheit so konfiguriert sind, dass die Abtrennung des Kalziumsulfates aus der Suspension in Schritt b) um einen Zeitpunkt t₍ᵢ₎ (mit t₍ᵢ₎ < t_{(MIN)}) eingeleitet wird, an dem die Differenz der Säurekonzentration zwischen resultierender Säurekonzentration Cₜ₍₀₎ nach Zugabe der Säure zum zu reinigenden Phosphorgips (Verweilzeit t₀ = 0 min.) und Säurekonzentration ct(i) an besagten Reaktionsende (t₍ᵢ₎) mindestens 25 % (ΔCₜ₍ᵢ₎ = 1-((Cₜ₍ᵢ₎-Cₜ₍₀₎)/(C_{t(Min)}-Cₜ₍₀₎)) ≥ 25 %) der Differenz zwischen resultierender Säurekonzentration Cₜ₍₀₎ nach Zugabe der Säure zum zu reinigenden Phosphorgips (Verweilzeit t₀ = 0 min.) und erzielbares Minimum der Säurekonzentration C_{t(MIN)} bei gegebenen Reaktionsbedingungen beträgt, wobei t_{(MIN)} = Zeitpunkt des erzielbaren Minimums der Säurekonzentration.

20. Anlage nach Anspruch 19, **dadurch gekennzeichnet, dass** die Säurekonzentration entweder aktiv gemessen wird oder durch einen oder mehrere erfasste Prozessparameter direkt oder indirekt berechnet wird.

## Claims

1. A process for producing sulfuric acid and cement clinker using calcium sulfate which is formed as a solid by-product and separated off in phosphoric acid production in the reaction of raw phosphate with sulfuric acid to form phosphoric acid, wherein the process comprises the following steps:
a) the calcium sulfate separated from the phosphoric acid is treated with an acid in order to obtain a suspension comprising purified calcium sulfate,
b) the purified calcium sulfate is separated in solid form from the liquid phase of the suspension obtained,
c) the purified calcium sulfate separated off is mixed with additives and reducing agents in order to obtain a raw meal mixture for cement clinker production, preferably with formation of the calcium component in the raw meal mixture for the cement clinker entirely from the purified calcium sulfate separated off,
d) the raw meal mixture is burnt in order to obtain the cement clinker, with formation of sulfur dioxide as offgas, and
e) the sulfur dioxide formed is supplied as raw material to sulfuric acid production in order to produce the sulfuric acid, wherein the sulfuric acid produced can be used as starting material in the phosphoric acid production and/or sent to another use,
**characterized in that** the purified calcium sulfate obtained in step b) is fed together with additives and reducing agents at a liquid content of 9% by weight - 22% by weight to a shaping device before the shaped raw meal mixture is fed to the preheating device and/or calciner and/or furnace.

2. The process as claimed in claim 1, wherein the separation of the calcium sulfate from the suspension in step b) is initiated at a juncture t₍ᵢ₎ (with t₍ᵢ₎ < t_{(MIN)}) at which the difference in the acid concentration between resulting acid concentration Cₜ₍₀₎ after addition of the acid to the phosphogypsum to be purified (residence time t₀ = 0 min.) and acid concentration ct(i) at said end of the reaction (t₍ᵢ₎) is at least 25% (ΔCₜ₍ᵢ₎ = 1-((cₜ₍ᵢ₎-cₜ₍₀₎)/(c_{t(Min)}-cₜ₍₀₎)) ≥ 25%) of the difference between resulting acid concentration Cₜ₍₀₎ after addition of the acid to the phosphogypsum to be purified (residence time t₀ = 0 min.) and achievable minimum acid concentration c_{t(MIN)} under given reaction conditions, where t_{(MIN)} = juncture of the achievable minimum acid concentration.

3. The process as claimed in claim 2, **characterized in that** the acid concentration is either measured actively or calculated directly or indirectly via one or more detected process parameters.

4. The process as claimed in any of the preceding claims, **characterized in that** the process is an integrated process.

5. The process as claimed in any of the preceding claims, **characterized in that** the purified calcium sulfate used for step c) has a P₂O₅ content of less than 1% by weight, preferably less than 0.5% by weight, more preferably less than 0.1% by weight, and a fluoride content of less than 1% by weight, preferably less than 0.5% by weight, more preferably less than 0.1% by weight.

6. The process as claimed in any of the preceding claims, **characterized in that** the purified calcium sulfate separated off from step b) which is used for step c) accounts for more than 70% by weight, preferably more than 80% by weight, more preferably more than 90% by weight, in the raw meal mixture.

7. The process as claimed in any of the preceding claims, **characterized in that** the raw meal mixture is burnt with process air having an oxygen content of more than 21% by volume, preferably more than 30% by volume, more preferably more than 50% by volume, and up to 100% by volume.

8. The process as claimed in any of the preceding claims, **characterized in that** the calcium sulfate which is used in step a) is
the calcium sulfate obtained from a separation unit in phosphoric acid production, preferably with use of the solid calcium sulfate obtained after the first separation from the phosphoric acid, preferably calcium sulfate filtercake, from phosphoric acid production directly or after one or more washes with liquid, preferably water, and/or
stockpiled calcium sulfate from phosphoric acid production.

9. The process as claimed in any of the preceding claims, **characterized in that** the calcium sulfate separated from the phosphoric acid which is used in step a) is calcium sulfate in the form of dihydrate, hemihydrate or a combination thereof.

10. The process as claimed in any of the preceding claims, **characterized in that** the acid is added in step a) in such an amount that the weight ratio of solids to liquid (S/L ratio) in the suspension is in the range from 1/10 to 1/1, preferably 1/5 to 1/1, and/or
the acid resulting from the treatment after a) is a 1 to 12 molar, preferably 3 to 10 molar, more preferably 5 to 8 molar, acid, and/or
wherein the acid is selected from hydrochloric acid, nitric acid, sulfurous acid and/or sulfuric acid, and/or
wherein the treatment in step a) is conducted at a temperature in the range from 15 to 100°C, preferably 30 to 80°C, more preferably 45 to 75°C, and/or
wherein the duration of treatment in step a) is in the range from 5 to 120 minutes, preferably 15 to 90 minutes, more preferably 20 to 60 minutes.

11. The process as claimed in any of the preceding claims, **characterized in that** the purified calcium sulfate separated off which is obtained in step b) contains at least 5% by weight, preferably at least 30% by weight, more preferably at least 50% by weight, of anhydrite, based on dry calcium sulfate.

12. The process as claimed in any of the preceding claims, **characterized in that** the additives for production of the raw meal mixture in step c) are raw materials or compounds including elements such as Si, Al, Fe and possibly other elements,
and/or reducing agents mixed in are carbon and/or hydrocarbons and/or elemental sulfur, and/or
additives and/or mineralizers for accelerated breakdown of the purified calcium sulfate and/or for improved formation of clinker minerals are added and/or
the cement clinker produced in step d) is used for cement production.

13. The process as claimed in any of the preceding claims, **characterized in that** the purified calcium sulfate obtained in step b), before being fed to step c), is dried to a water content below 22% by weight, preferably 12-14% by weight and more preferably below 5% by weight, even more preferably below 1% by weight.

14. The process as claimed in any of the preceding claims, **characterized in that** the purified calcium sulfate obtained in step b) is fed together with additives and reducing agents at a liquid content of 12% by weight - 14% by weight to a shaping device, for example a press and/or a pan and/or a stirred mixer and/or a mechanical fluidized bed reactor, before the shaped raw meal mixture is fed to the preheating device and/or calciner and/or furnace.

15. The process as claimed in any of the preceding claims, **characterized in that** the purified calcium sulfate, before being fed to step c), by comparison with the calcium sulfate used in step a), has a reduced content of radioactive elements and/or unwanted elements and/or rare earths.

16. The process as claimed in any of the preceding claims, **characterized in that** the scope of purification of the calcium sulfate in step a) is adjusted with respect to the impurities present in the additives used for the raw meal, and the guide values for phosphorus and fluorine that are to be observed for the cement clinker, which are preferably not more than 1.0% by weight, more preferably not more than 0.5% by weight, even more preferably not more than 0.1% by weight, of P₂O₅ and/or preferably not more than 0.5% by weight, more preferably not more than 0.25% by weight, even more preferably not more than 0.1% by weight, of F, and/or
the liquid budget, preferably the water budget, of the phosphoric acid production is changed only insignificantly, if at all, by the integrated process, especially since the liquid input, preferably the water input, for purification of the calcium sulfate in the integrated process is coupled to the liquid budget, preferably the water budget, of the phosphoric acid production.

17. The process as claimed in any of the preceding claims, **characterized in that** fuels used in the process are partly or completely secondary fuels, and/or the purified calcium sulfate separated off serves as COz-neutral calcium component for the production of the cement clinker, and/or
not only the purified calcium sulfate separated off but also at least one further CO₂-neutral raw material is used for the production of the cement clinker, and/or
the energy required for the process is provided partly or completely by renewable energy sources.

18. A plant for production of sulfuric acid and cement clinker using calcium sulfate which is formed as a solid by-product and separated off in phosphoric acid production in the reaction of raw phosphate with sulfuric acid to form phosphoric acid, wherein the plant comprises the following devices:
a) a calcium sulfate reaction unit suitable for treatment of the calcium sulfate separated from the phosphoric acid therein with an acid in order to obtain a suspension comprising purified calcium sulfate,
b) a calcium sulfate separation unit suitable for separating the purified calcium sulfate in solid form from the liquid phase of the suspension obtained,
c) a raw meal mixing unit suitable for mixing the purified calcium sulfate separated off therein with additives and reducing agents in order to obtain a raw meal mixture for cement clinker production, preferably with formation of the calcium component for the cement clinker in the raw meal mixture entirely from the purified calcium sulfate separated off,
d) a cement clinker production unit, especially a combination of a preheater, at least one burner device and a cooler that are suitable for preheating, burning and cooling the raw meal mixture in order to obtain the cement clinker, with formation of sulfur dioxide as offgas, and
e) a sulfuric acid production plant which is supplied with the optionally purified sulfur dioxide offgas formed in the cement clinker production unit as raw material in order to produce sulfuric acid, wherein the sulfuric acid production plant may be part of the phosphoric acid production plant or an external sulfuric acid production plant,
**characterized in that** the plant has a shaping device disposed upstream of the preheating device and/or calciner and/or furnace.

19. The plant as claimed in claim 18, **characterized in that** the calcium sulfate reaction unit and the calcium sulfate separation unit are configured such that the separation of the calcium sulfate from the suspension in step b) is initiated at a juncture t₍ᵢ₎ (with t₍ᵢ₎ < t_{(MIN)}) at which the difference in acid concentration between resulting acid concentration Cₜ₍₀₎ after addition of the acid to the phosphogypsum to be cleaned (residence time t₀ = 0 min.) and acid concentration ct(i) at said end of the reaction (t₍ᵢ₎) is at least 25% (Δcₜ₍ᵢ₎ = 1-((cₜ₍ᵢ₎-cₜ₍₀₎)/(c_{t(Min)}-cₜ₍₀₎)) ≥ 25%) of the difference between resulting acid concentration Cₜ₍₀₎ after addition of the acid to the phosphogypsum to be purified (residence time t₀ = 0 min.) and achievable minimum acid concentration C_{t(MIN)} under given reaction conditions, where t_{(MIN)} = juncture of the achievable minimum acid concentration.

20. The plant as claimed in claim 19, **characterized in that** the acid concentration is either measured actively or calculated directly or indirectly via one or more detected process parameters.

## Revendications

1. Procédé de production d'acide sulfurique et de clinker de ciment utilisant le sulfate de calcium qui est formé en tant que sous-produit solide et séparé lors de la production d'acide phosphorique dans la réaction du phosphate brut avec l'acide sulfurique pour former de l'acide phosphorique, dans lequel le procédé comprend les étapes suivantes :
a) le sulfate de calcium séparé de l'acide phosphorique est traité avec un acide afin d'obtenir une suspension comprenant du sulfate de calcium purifié,
b) le sulfate de calcium purifié est séparé sous forme solide de la phase liquide de la suspension obtenue,
c) le sulfate de calcium purifié séparé est mélangé avec des additifs et des agents réducteurs afin d'obtenir un mélange de farine crue pour la production de clinker de ciment, de préférence avec la formation du composant calcium dans le mélange de farine crue pour le clinker de ciment entièrement à partir du sulfate de calcium purifié séparé,
d) le mélange de farine crue est brûlé pour obtenir le clinker, avec formation de dioxyde de soufre comme gaz d'échappement, et
e) le dioxyde de soufre formé est fourni comme matière première à la production d'acide sulfurique afin de produire de l'acide sulfurique, l'acide sulfurique produit pouvant être utilisé comme matière première dans la production d'acide phosphorique et/ou être utilisé à d'autres fins,
**caractérisé par le fait que** le sulfate de calcium purifié obtenu à l'étape b) est introduit avec des additifs et des agents réducteurs à une teneur en liquide de 9 % en poids - 22 % en poids dans un dispositif de mise en forme avant que le mélange de farine crue mis en forme ne soit introduit dans le dispositif de préchauffage et/ou le calcinateur et/ou le four.

2. Procédé selon la revendication 1, dans lequel la séparation du sulfate de calcium de la suspension à l'étape b) est initiée à un point t₍ᵢ₎ (avec t₍ᵢ₎ < t_{(MIN)} ) auquel la différence de concentration d'acide entre la concentration d'acide résultante Cₜ₍₀₎ après l'ajout de l'acide au phosphogypse à purifier (temps de séjour t₀ = 0 min.) et la concentration d'acide ct(i) à la fin de la réaction (t₍ᵢ₎ ) est d'au moins 25 % (·cₜ₍ᵢ₎ = 1-((c -cₜ₍ᵢ₎ₜ₍₀₎ )/(ct_{(Min})-cₜ₍₀₎ )) ≥ 25 %) de la différence entre la concentration d'acide résultante Cₜ₍₀₎ après l'addition de l'acide au phosphogypse à purifier (temps de séjour t₀ = 0 min.) et la concentration minimale d'acide réalisable C_{t(MIN)} dans des conditions de réaction données, où t_{(MIN)} = point de jonction de la concentration minimale d'acide réalisable.

3. Procédé selon la revendication 2, **caractérisé par le fait que** la concentration d'acide est soit mesurée activement, soit calculée directement ou indirectement par l'intermédiaire d'un ou de plusieurs paramètres de procédé détectés.

4. Procédé selon l'une des revendications précédentes, **caractérisé par le fait qu'**il s'agit d'un procédé intégré.

5. Procédé selon l'une quelconque des revendications précédentes, **caractérisé par le fait que** le sulfate de calcium purifié utilisé pour l'étape c) a une teneur en P O₂₅ inférieure à 1 % en poids, de préférence inférieure à 0,5 % en poids, plus préférentiellement inférieure à 0,1 % en poids, et une teneur en fluorure inférieure à 1 % en poids, de préférence inférieure à 0,5 % en poids, plus préférentiellement inférieure à 0,1 % en poids.

6. Procédé selon l'une quelconque des revendications précédentes, **caractérisé par le fait que** le sulfate de calcium purifié séparé à l'étape b) et utilisé à l'étape c) représente plus de 70 % en poids, de préférence plus de 80 % en poids, de préférence encore plus de 90 % en poids, du mélange de farine brute.

7. Procédé selon l'une quelconque des revendications précédentes, **caractérisé par le fait que** le mélange de farine brute est brûlé avec de l'air de traitement ayant une teneur en oxygène supérieure à 21 % en volume, de préférence supérieure à 30 % en volume, plus préférentiellement supérieure à 50 % en volume, et jusqu'à 100 % en volume.

8. Procédé selon l'une quelconque des revendications précédentes, **caractérisé par le fait que** le sulfate de calcium utilisé à l'étape a) est
le sulfate de calcium obtenu à partir d'une unité de séparation dans la production d'acide phosphorique, de préférence en utilisant le sulfate de calcium solide obtenu après la première séparation de l'acide phosphorique, de préférence le gâteau de filtration de sulfate de calcium, provenant de la production d'acide phosphorique, directement ou après un ou plusieurs lavages avec un liquide, de préférence de l'eau, et/ou
le sulfate de calcium stocké lors de la production d'acide phosphorique.

9. Procédé selon l'une quelconque des revendications précédentes, **caractérisé par le fait que** le sulfate de calcium séparé de l'acide phosphorique utilisé à l'étape a) est un sulfate de calcium sous forme de dihydrate, d'hémihydrate ou d'une combinaison de ceux-ci.

10. Procédé selon l'une quelconque des revendications précédentes, **caractérisé par le fait que**
l'acide est ajouté à l'étape a) en une quantité telle que le rapport en poids entre les solides et le liquide (rapport S/L) dans la suspension est compris entre 1/10 et 1/1, de préférence entre 1/5 et 1/1, et/ou
l'acide résultant du traitement après a) est un acide de 1 à 12 molaires, de préférence de 3 à 10 molaires, plus préférentiellement de 5 à 8 molaires, et/ou
dans lequel l'acide est choisi parmi l'acide chlorhydrique, l'acide nitrique, l'acide sulfureux et/ou l'acide sulfurique, et/ou
dans lequel le traitement à l'étape a) est effectué à une température comprise entre 15 et 100°C, de préférence entre 30 et 80°C, plus préférentiellement entre 45 et 75°C, et/ou
la durée du traitement à l'étape a) est comprise entre 5 et 120 minutes, de préférence entre 15 et 90 minutes, plus préférentiellement entre 20 et 60 minutes.

11. Procédé selon l'une quelconque des revendications précédentes, **caractérisé par le fait que** le sulfate de calcium séparé purifié obtenu à l'étape b) contient au moins 5 % en poids, de préférence au moins 30 % en poids, plus préférentiellement au moins 50 % en poids, d'anhydrite, sur la base du sulfate de calcium sec.

12. Procédé selon l'une quelconque des revendications précédentes, **caractérisé par le fait que** les additifs pour la production du mélange de farine brute à l'étape c) sont des matières premières ou des composés comprenant des éléments tels que Si, Al, Fe et éventuellement d'autres éléments,
et/ou des agents réducteurs mélangés à du carbone et/ou des hydrocarbures et/ou du soufre élémentaire, et/ou
des additifs et/ou des minéralisateurs destinés à accélérer la décomposition du sulfate de calcium purifié et/ou à améliorer la formation des minéraux du clinker sont ajoutés et/ou
le clinker produit à l'étape d) est utilisé pour la production de ciment.

13. Procédé selon l'une quelconque des revendications précédentes, **caractérisé par le fait que** le sulfate de calcium purifié obtenu à l'étape b), avant d'être envoyé à l'étape c), est séché jusqu'à une teneur en eau inférieure à 22% en poids, de préférence 12-14% en poids et de préférence inférieure à 5% en poids, de préférence encore inférieure à 1% en poids.

14. Procédé selon l'une quelconque des revendications précédentes, **caractérisé par le fait que** le sulfate de calcium purifié obtenu à l'étape b) est introduit avec des additifs et des agents réducteurs à une teneur en liquide de 12 % en poids - 14 % en poids dans un dispositif de mise en forme, par exemple une presse et/ou un bac et/ou un mélangeur agité et/ou un réacteur mécanique à lit fluidisé, avant que le mélange de farine crue mis en forme ne soit introduit dans le dispositif de préchauffage et/ou le four de calcination et/ou le four.

15. Procédé selon l'une quelconque des revendications précédentes, **caractérisé par le fait que** le sulfate de calcium purifié, avant d'être envoyé à l'étape c), présente, par rapport au sulfate de calcium utilisé à l'étape a), une teneur réduite en éléments radioactifs et/ou en éléments indésirables et/ou en terres rares.

16. Procédé selon l'une quelconque des revendications précédentes, **caractérisé en ce que** l'étendue de la purification du sulfate de calcium à l'étape a) est ajustée en fonction des impuretés présentes dans les additifs utilisés pour le cru, et des valeurs indicatives de phosphore et de fluor à respecter pour le clinker de ciment, qui ne sont de préférence pas supérieures à 1.0 % en poids, de préférence pas plus de 0,5 % en poids, de préférence encore pas plus de 0,1 % en poids, de P₂ Os et/ou de préférence pas plus de 0,5 % en poids, de préférence pas plus de 0,25 % en poids, de préférence encore moins de 0,1 % en poids, de F et/ou de 0,5 % en poids, de préférence pas plus de 0,25 % en poids, de préférence encore moins de 0,1 % en poids, de PO.
le bilan liquide, de préférence le bilan hydrique, de la production d'acide phosphorique n'est modifié que de manière insignifiante, voire pas du tout, par le procédé intégré, d'autant plus que l'apport de liquide, de préférence l'apport d'eau, pour la purification du sulfate de calcium dans le procédé intégré est couplé au bilan liquide, de préférence le bilan hydrique, de la production d'acide phosphorique.

17. Procédé selon l'une quelconque des revendications précédentes, **caractérisé par le fait que**
les combustibles utilisés dans le processus sont partiellement ou totalement des combustibles secondaires, et/ou
le sulfate de calcium purifié séparé sert de composant calcique neutre en COz pour la production du clinker de ciment, et/ou
non seulement le sulfate de calcium purifié séparé, mais aussi au moins une autre matière première neutre du point de vue du COz sont utilisés pour la production du clinker de ciment, et/ou
l'énergie nécessaire au processus est fournie partiellement ou totalement par des sources d'énergie renouvelables.

18. Installation de production d'acide sulfurique et de clinker de ciment utilisant le sulfate de calcium qui est formé comme sous-produit solide et séparé lors de la production d'acide phosphorique dans la réaction du phosphate brut avec l'acide sulfurique pour former de l'acide phosphorique, dans laquelle l'installation comprend les dispositifs suivants :
a) une unité de réaction au sulfate de calcium apte à traiter le sulfate de calcium séparé de l'acide phosphorique avec un acide afin d'obtenir une suspension comprenant du sulfate de calcium purifié,
b) une unité de séparation du sulfate de calcium apte à séparer le sulfate de calcium purifié sous forme solide de la phase liquide de la suspension obtenue,
c) une unité de mélange de farine crue apte à mélanger le sulfate de calcium purifié qui y est séparé avec des additifs et des agents réducteurs afin d'obtenir un mélange de farine crue pour la production de clinker de ciment, de préférence avec la formation du composant de calcium pour le clinker de ciment dans le mélange de farine crue entièrement à partir du sulfate de calcium purifié qui en est séparé,
d) une unité de production de clinker, en particulier une combinaison d'un préchauffeur, d'au moins un dispositif de combustion et d'un refroidisseur qui conviennent pour préchauffer, brûler et refroidir le mélange de farine crue afin d'obtenir le clinker, avec formation de dioxyde de soufre en tant que gaz d'échappement, et
e) une usine de production d'acide sulfurique alimentée par les effluents gazeux de dioxyde de soufre éventuellement purifiés formés dans l'unité de production de clinker comme matière première pour produire de l'acide sulfurique, l'usine de production d'acide sulfurique pouvant faire partie de l'usine de production d'acide phosphorique ou être une usine de production d'acide sulfurique externe,
**caractérisé par le fait que** l'installation comporte un dispositif de mise en forme placé en amont du dispositif de préchauffage et/ou du calcinateur et/ou du four.

19. Installation selon la revendication 18, **caractérisée en ce que** l'unité de réaction sulfate de calcium et l'unité de séparation sulfate de calcium sont configurées pour que la séparation du sulfate de calcium de la suspension à l'étape b) soit initiée à un moment t₍ᵢ₎ (avec t₍ᵢ₎ < t_{(MIN)} ) où la différence de concentration d'acide entre la concentration d'acide résultante Cₜ₍₀₎ après addition de l'acide au phosphogypse à nettoyer (temps de séjour t₀ = 0 min.) et la concentration d'acide ct(i) à la fin de la réaction (t₍ᵢ₎ ) est d'au moins 25 % (·cₜ₍ᵢ₎ = 1-((c -cₜ₍ᵢ₎ₜ₍₀₎ )/(ct_{(Min)}-Cₜ₍₀₎ )) ≥ 25 %) de la différence entre la concentration d'acide résultante Cₜ₍₀₎ après l'addition de l'acide au phosphogypse à purifier (temps de séjour t₀ = 0 min.) et la concentration minimale d'acide réalisable C_{t(MIN)} dans des conditions de réaction données, où t_{(MIN)} = point de jonction de la concentration minimale d'acide réalisable.

20. L'installation selon la revendication 19, **caractérisée par le fait que** la concentration d'acide est soit mesurée activement, soit calculée directement ou indirectement par l'intermédiaire d'un ou de plusieurs paramètres de processus détectés.
